(19) Europäisches Patentamt
European Patent Office
Office européen des brevets

(11) **EP 4 578 535 A1**

(12) **EUROPEAN PATENT APPLICATION**
published in accordance with Art. 153(4) EPC

(43) Date of publication:
**02.07.2025 Bulletin 2025/27**

(21) Application number: **23857327.3**

(22) Date of filing: **22.08.2023**

(51) International Patent Classification (IPC):
**B01D 69/00** (2006.01)     **B01D 69/02** (2006.01)
**B01D 69/08** (2006.01)     **B01D 71/26** (2006.01)
**D01F 6/04** (2006.01)

(52) Cooperative Patent Classification (CPC):
**B01D 69/00; B01D 69/02; B01D 69/08;
B01D 71/26; D01F 6/04**

(86) International application number:
**PCT/JP2023/030076**

(87) International publication number:
**WO 2024/043218 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.08.2022  JP 2022134678
19.04.2023  JP 2023068254**

(71) Applicant: **Toray Industries, Inc.
Tokyo 103-8666 (JP)**

(72) Inventors:
• **AKUTSU Miku
Otsu-shi, Shiga 520-8558 (JP)**
• **AOYAMA Shigeru
Otsu-shi, Shiga 520-8558 (JP)**
• **TAGUCHI Marina
Otsu-shi, Shiga 520-8558 (JP)**

(74) Representative: **Kador & Partner Part mbB
Corneliusstraße 15
80469 München (DE)**

(54) **SEPARATION MEMBRANE AND METHOD FOR PRODUCING SAME**

(57)    Examples of a degassing method of removing a dissolved gas from a liquid and a gas exchange method of exchanging a dissolved gas in a liquid and a gas component in a gas phase include a method using a separation membrane. To provide a separation membrane having solvent resistance while maintaining high gas permeability using poly(4-methyl-1-pentene) excellent in solvent resistance and gas permeability. In order to achieve the object, there is provided a separation membrane containing poly(4-methyl-1-pentene) as a main component and including a surface layer and an inner layer, at least one surface layer having lamellar crystals, wherein micropores are provided on the surface layer having the lamellar crystals, an opening ratio is 0.1% to 10% when a ratio of the micropores to a membrane surface is taken as the opening ratio and the membrane surface is 100%, and an average pore size of the micropores is 3 nm to 30 nm.

【Fig.1 】

**Description**

TECHNICAL FIELD

The present invention relates to a gas separation membrane and a manufacturing method therefor.

BACKGROUND ART

Examples of a degassing method of removing a dissolved gas from a liquid and a gas exchange method of exchanging a dissolved gas in a liquid and a gas component in a gas phase include a method using a hollow fiber membrane. Hollow fiber membranes to be used are required to have high gas permeability and solvent resistance to liquids to be treated, and therefore poly(4-methyl-1-pentene) excellent in these properties is sometimes used as a membrane material. Among the hollow fiber membranes, a membrane having a dense surface layer on the surface is desirable in that solvent resistance can be enhanced because entry of a solvent into the membrane of the hollow fiber membrane can be suppressed.

Hitherto, various methods have been proposed in order to obtain a gas-permeable membrane using a polyolefin-based polymer as a material. For example, Patent Document 1 discloses a wet method using a polyolefin-based polymer. In the membrane of Patent Document 1, a polymer solution in which a polyolefin-based polymer is dissolved in a good solvent is extruded from a spinneret at a temperature higher than the melting point of a polyolefin resin, and this polymer solution is brought into contact with a cooling solvent. The polyolefin-based polymer has an integral asymmetric structure in which a dense non-porous material is formed on the surface of the membrane and a porous material is formed inside the membrane by thermally induced phase separation. In the method of Patent Document 1, solvent resistance was insufficient.

Patent Document 2 discloses a melt spinning method using a polyolefin-based polymer. Specifically, using a multiple cylinder type spinning nozzle, a crystalline thermoplastic polymer and a second polymer are arranged in two layers, melt composite spinning is performed, and then stretching is performed to make only a layer made of the crystalline thermoplastic polymer porous. That is, the polyolefin-based resin is extruded from a spinneret at a temperature equal to or higher than the melting point to be cooled and solidified, and then stretched to partially make pores inside, thereby forming a structure in which the surface is non-porous and the inside is porous. In the method of Patent Document 2, a membrane having high strength is obtained, but gas permeability and solvent resistance are not sufficient.

Patent Document 3 discloses a melt spinning method for obtaining a hollow fiber microporous membrane. Specifically, the polyolefin-based resin is extruded from a spinneret at a temperature equal to or higher than the melting point to be cooled and solidified, subjected to a long-time heat treatment, and then stretched to cleave the interface of the lamellar crystals, thereby forming a communicated microporous structure. In the method of Patent Document 3, a membrane having high gas permeability is obtained, but since a dense surface layer is not formed on the membrane surface, entry of a solvent into the hollow fiber membrane is not suppressed, and in addition, since an interface of lamellar crystals is cleaved, solvent resistance is insufficient.

Patent Document 4 discloses a melt spinning method for obtaining a hollow fiber heterogeneous membrane. The term "heterogeneous" means that a highly crystalline polyolefin-based polymer is melt-extruded under a certain take-up tension, and then air-cooled and stretched to form a structure having no pores on the surface and micropores on the inner layer. In the method of Patent Document 4, micropores can be provided on the membrane surface by controlling the take-up tension, but gas permeability is low, and solvent resistance is insufficient.

PRIOR ART DOCUMENTS

PATENT DOCUMENTS

Patent Document 1: International Publication No. 2000/043113
Patent Document 2: Japanese Patent Laid-open Publication No. 7-116483
Patent Document 3: Japanese Patent No. 5413317
Patent Document 4: Japanese Patent Laid-open Publication No. 6-210146

SUMMARY OF THE INVENTION

PROBLEMS TO BE SOLVED BY THE INVENTION

According to findings by the present inventors, in a method of separating a dissolved gas from a liquid or a gas exchange method of exchanging a dissolved gas in a liquid and a gas component in a gas phase, high solvent resistance is insufficient only by having a dense membrane surface, and it is important that lamellar crystals are sufficiently grown densely to form a membrane surface having accumulated lamellar crystals.

The membranes obtained by the methods of Patent Document 1 and Patent Document 4 have a dense surface, but have a problem that lamellar crystals are not formed and solvent resistance is not sufficient. In addition, the separation membrane obtained in Patent Document 2 has high strength, but has insufficient porosity, and thus does not have sufficient gas permeability, and further, since sufficient lamellar crystals are not formed on the membrane surface, solvent resistance is also not sufficient. In addition, the separation membrane obtained in Patent Document 3 has high gas permeability, but does not have a dense surface layer on the membrane surface, and further, although lamellar crystals are observed on the membrane surface, the separation membrane does not have accumulated lamellar crystals, and thus has insufficient solvent resistance.

As described above, poly(4-methyl-1-pentene) is a material excellent in solvent resistance, but the conventional technique does not include lamellar crystals accumulated on the membrane surface, and cannot achieve both gas permeability and solvent resistance. On the other hand, due to high solvent resistance, a membrane surface having lamellar crystals accumulated has a problem that gas is shielded and gas permeability is easily deteriorated because the membrane surface is covered with plate-like crystals.

From the above, an object of the present invention is to provide a separation membrane having both gas permeability and more excellent solvent resistance using poly(4-methyl-1-pentene).

SOLUTIONS TO THE PROBLEMS

As a result of intensive studies to solve the above problems, the present inventors have found that a separation membrane containing poly(4-methyl-1-pentene) as a main component, the separation membrane having lamellar crystals accumulated on the membrane surface and having an opening in which the membrane surface on the side having the accumulated lamellar crystals has selective gas permeation characteristics has both high gas permeability and solvent resistance, and have completed the present invention. The separation membrane of the present invention has the following configuration.

1. A separation membrane comprising poly(4-methyl-1-pentene) as a main component and including a surface layer and an inner layer, at least one surface layer having lamellar crystals, wherein micropores are provided on the surface layer having the lamellar crystals, an opening ratio is 0.1% to 10% when a ratio of the micropores to a membrane surface is taken as the opening ratio and the membrane surface is 100%, and an average pore size of the micropores is 3 nm to 30 nm.

2. The separation membrane according to 1, wherein $N_2$ permeability at a differential pressure of 100 kPa is 1000 GPU or more.

3. The separation membrane according to 1 or 2, wherein the degree of crystallinity on the membrane surface of the surface layer having the lamellar crystals is 5% to 35%.

4. The separation membrane according to any one of 1 to 3, wherein the area ratio of the lamellar crystals in the membrane surface of the surface layer having the lamellar crystals is 10% to 60% when the area excluding the opening portions of the membrane surface is 100%.

5. The separation membrane according to any one of 1 to 4, wherein the period of the lamellar crystal on the membrane surface of the surface layer having the lamellar crystals is 10 nm to 80 nm.

6. The separation membrane according to any one of 1 to 5, wherein a number of micropores are 1 pores /$\mu m^2$ or more and 20000 pores /$\mu m^2$ or less in a surface layer having the lamellar crystals.

7. The separation membrane according to any one of 1 to 6, wherein the separation membrane has a porosity of 30% to 70%.

8. The separation membrane according to any one of 1 to 7, wherein in the inner layer of the separation membrane, when a cross-sectional area cut in a thickness direction is 100%, a porosity is 25% to 60%.

9. The separation membrane according to any of 1 to 8, the separation membrane having a hollow fiber shape.

10. The separation membrane according to 9, wherein the surface layer having the lamellar crystals is an outer surface of a hollow fiber separation membrane.

11. The separation membrane according to 9 or 10, wherein a ratio a/b of a major axis length a and a minor axis length b of a pore is 1.0 to 5.0 in a cross section obtained by cutting the inner layer of the hollow fiber separation membrane parallel to the thickness direction of the membrane and parallel to the thickness direction of the membrane.

12. The separation membrane according to any one of 1 to 9, wherein the $N_2$ permeability at a differential pressure of 100 kPa after the separation membrane is immersed in the following organic solvent A for 3 seconds is 5 GPU or more. Organic solvent A: Chloroform/isopropyl alcohol =1/1 (volume/volume)

13. A degassing module comprising the separation membrane according to any one of 1 to 12.

14. A method of manufacturing a separation membrane, comprising the following steps (A1) and (A2):

(A1) a preparation step of melt-kneading a mixture containing 10 mass% to 50 mass% of poly(4-methyl-1-pentene) and 50 mass% to 90 mass% of a plasticizer to obtain a resin composition;

(A2) a forming step of discharging the resin composition from a discharge spinneret, and introducing the resin composition into a cooling bath of a solvent in which a solubility parameter distance Ra to poly(4-methyl-1-pentene) is in a range of 4.0 to 14.0 and a solubility parameter distance Rb to the plasticizer is in a range of 3.0 to 6.0 immediately after the resin composition passing through an idle running part of 10 mm to 30 mm, to obtain a resin formed product.

15. The method for producing a separation membrane according to 14, further comprising, after the forming step (A2) of obtaining the resin formed product, a washing step (A3) of extracting the plasticizer contained in the resin formed product into a solvent having a solubility parameter distance Ra to poly(4-methyl-1-pentene) in a range of 8 to 35 and a solubility parameter distance Rb to the plasticizer in a range of 5 to 35.

16. The method for producing a separation membrane according to 15, wherein the resin formed product is stretched 1.1 to 5.0 times during the washing step (A3).

17. A method for producing a separation membrane, comprising the following steps (B1) to (B3), a resin formed product being stretched 1.1 to 5.0 times in the washing step (B3):

(B1) A preparation step of melt-kneading a mixture containing 10 mass% to 50 mass% of poly(4-methyl-1-pentene) and 50 mass% to 90 mass% of a plasticizer to obtain a resin composition;

(B2) A forming step of, immediately after discharging the resin composition from a discharge spinneret, introducing the resin composition into a cooling bath of a solvent in which a solubility parameter distance Ra to poly(4-methyl-1-pentene) is in a range of 5.0 to 18.0 and a solubility parameter distance Rb to the plasticizer is in a range of 1.0 to 2.9 or 6.5 to 10.0 to obtain a resin formed product;

(B3) A washing step of extracting the plasticizer contained in the obtained resin formed product into a solvent having a solubility parameter distance Ra to poly(4-methyl-1-pentene) in a range of 8 to 35 and a solubility parameter distance Rb to the plasticizer in a range of 5 to 35.

EFFECTS OF THE INVENTION

According to the present invention, there is provided a separation membrane which includes lamellar crystals accumulated on a membrane surface of a surface layer and has high gas permeability due to openings, that is, micropores, which do not adversely affect solvent resistance. That is, an excellent separation membrane having both high gas permeability and more excellent solvent resistance is provided using poly(4-methyl-1-pentene).

BRIEF DESCRIPTION OF THE DRAWINGS

Fig. 1 is a schematic view schematically showing a membrane surface of a hollow fiber separation membrane.

Fig. 2 is an example of an SEM image obtained by imaging a membrane surface of a separation membrane at a magnification of 60,000 times.

Fig. 3 is an example of an SEM image obtained by imaging a cross section obtained by cutting a separation membrane in a thickness direction at a magnification of 10,000 times.

Fig. 4 is a processed image of a surface layer cross section from which noise has been removed after binarization of the image of Fig. 3.

Fig. 5 is a processed image for measuring the thickness of the surface layer from the image of Fig. 4.

Fig. 6 is an explanatory view of a method for measuring a major axis length a and a minor axis length b of pores in an inner layer of a separation membrane.

EMBODIMENTS OF THE INVENTION

The separation membrane of the present invention contains poly(4-methyl-1-pentene) as a main component, has lamellar crystals accumulated in at least one dense surface layer, has openings on a membrane surface of the surface layer having the accumulated lamellar crystals, and has an opening ratio of 0.1% to 10% when the membrane surface is 100%, and an average pore size of the opening is 3 to 30 nm. Here, the opening ratio is a ratio of the total area of micropores to the area of the membrane surface. In the present specification, the mass-based proportion (percentage, part, etc.) is the same as the weight-based proportion (percentage, part, etc.). The separation membrane of the present invention will be described below.

(Resin composition constituting separation membrane)

The resin composition constituting the separation membrane of the present invention contains poly(4-methyl-1-pentene) represented by the following (1) as a main component. In addition to (1), components shown in the following (2) to (3) can be contained.

(1) Poly(4-methyl-1-pentene) (hereinafter, it is referred to as "PMP")

The separation membrane of the present invention needs to contain PMP as a main component. The main component as used herein refers to a component contained in an amount of 70 mass% or more of all components of the separation membrane.

PMP may have a repeating unit derived from 4-methyl-1-pentene. PMP may be a homopolymer of 4-methyl-1-pentene or a copolymer with a monomer copolymerizable with 4-methyl-1-pentene other than 4-methyl-1-pentene. Specific examples of the monomer copolymerizable with 4-methyl-1-pentene include olefins having 2 to 20 carbon atoms other than 4-methyl-1-pentene (hereinafter referred to as "olefins having 2 to 20 carbon atoms").

Examples of the olefin having 2 to 20 carbon atoms to be copolymerized with 4-methyl-1-pentene include ethylene, propylene, 1-butene, 1-hexene, 1-heptene, 1-octene, 1-decene, 1-tetradecene, 1-hexadecene, 1-heptadecene, 1-octadecene, and 1-eicosene. The olefin having 2 to 20 carbon atoms to be copolymerized with 4-methyl-1-pentene may be one kind or a combination of two or more kinds.

The density of the PMP raw material used as the raw material of the separation membrane of the present invention is preferably 825 to 840 (kg/m$^3$), and more preferably 830 to 835 (kg/m$^3$). When the density is smaller than the above range, the mechanical strength of the separation membrane is reduced, which may lead to problems such as defects are likely to occur. On the other hand, when the density is larger than the above range, gas permeability tends to decrease.

The melt flow rate (MFR) of PMP is not particularly limited as long as it is easily mixed with the later-described plasticizer and coextrusion is possible. The MFR is preferably 1 to 200 g/10 min, and more preferably 5 to 30 g/10 min under the conditions of a temperature of 260°C and a load of 5 kg. When the MFR is in the above-described range, it is easy to perform extrusion molding to a relatively uniform film thickness. The PMP raw material may be a commercially available PMP polymer, and examples thereof include TPX (registered trademark) manufactured by Mitsui Chemicals, Inc.

The content of PMP in the separation membrane is preferably 70 to 100 mass%, more preferably 80 mass% to 100 mass%, still more preferably 90 mass% to 100 mass% when the total components of the separation membrane is 100 mass%. When the content of PMP in the separation membrane is 70 mass% or more, gas permeability becomes sufficient.

The content of PMP in the raw material for manufacturing the separation membrane is preferably 10 mass% to 50 mass% when the total of the components constituting the raw material is 100 mass%. When the content is 10 mass% or more, the membrane strength of the separation membrane is improved. On the other hand, when the content is 50 mass% or less, the permeability of the separation membrane is improved. The content is more preferably 15 to 50 mass%, still more preferably 20 to 45 mass%, and particularly preferably 25 to 40 mass%.

(2) Plasticizer

The resin composition constituting the separation membrane of the present invention can contain a plasticizer of PMP. From the viewpoint of enhancing the permeability, the content of the plasticizer in the separation membrane is preferably 1000 ppm (mass basis) or less, more preferably 500 ppm (mass basis) or less, and particularly preferably 100 ppm (mass basis) or less.

The plasticizer of PMP is not particularly limited as long as it is a compound that thermoplasticizes PMP. As the plasticizer of PMP, not only one plasticizer but also two or more plasticizers may be used in combination. Examples of the plasticizer of PMP include palm kernel oil, dibutyl phthalate, dioctyl phthalate, butyl stearate, dibenzyl ether, coconut oil, and mixtures thereof. Among them, dibutyl phthalate and dibenzyl ether are preferably used from the viewpoint of compatibility and stringiness.

The plasticizer of PMP is preferably eluted from the separation membrane after the separation membrane is formed. The content of the plasticizer in the raw material for manufacturing the separation membrane is preferably 50 mass% to 90 mass% when the total of the components constituting the raw material is 100 mass%. When the content in the row material is 90 mass% or less, the membrane strength of the separation membrane is improved. When the content in the raw material is 50 mass% or more, the permeability of the separation membrane is improved. The content in the raw material is more preferably 50 mass% to 85 mass%, still more preferably 55 mass% to 80 mass%, and particularly preferably 60 mass% to 75 mass%.

(3) Additive

The resin composition constituting the separation membrane of the present invention may contain additives other than those described in (2) as long as the effects of the present invention are not impaired.

Examples of the additive include resins such as cellulose ether, polyacrylonitrile, polyolefin, a polyvinyl compound, polycarbonate, poly(meth)acrylate, polysulfone or polyethersulfone, or the like, organic lubricants, crystal nucleating agents, organic particles, inorganic particles, end-capping agents, chain extenders, ultraviolet absorbers, infrared absorbers, coloring inhibitors, matting agents, antibacterial agents, electrostatic removers, deodorants, flame retardants, weathering agents, antistatic agents, antioxidants, ion exchangers, antifoaming agents, coloring pigments, optical brighteners or dyes, or the like.

(Shape of separation membrane)

As the shape of the separation membrane of the present invention, a hollow fiber separation membrane (hereinafter, it may be referred to as a "hollow fiber membrane") is preferably employed, but the separation membrane of the present invention is not limited to a hollow fiber shape. The hollow fiber membrane is preferable because the hollow fiber membrane can be efficiently filled in the module, and an effective membrane area per unit volume of the module can be increased.

The shape of the separation membrane in the present invention, that is, the thickness of the separation membrane, the outer diameter and inner diameter when the separation membrane is a hollow fiber membrane, and the hollowness, can be determined by observing, for example, a cross section (hereinafter, it is referred to as a "radial cross section") cut in the thickness direction of the membrane by applying stress to the separation membrane sufficiently cooled in liquid nitrogen, using an optical microscope or a scanning electron microscope (SEM). A specific method will be described in detail in Examples.

The separation membrane of the present invention includes a dense surface layer and a porous inner layer. The separation membrane obtained by the method of Patent Document 3 is a microporous membrane in which a microporous structure is formed on the entire membrane by stretching, and is different from the separation membrane of the present application. The thickness of the entire separation membrane including the surface layer and the inner layer is preferably $10\ \mu m$ to $500\ \mu m$ from the viewpoint of achieving both permeability and membrane strength. The thickness of the entire separation membrane is more preferably $30\ \mu m$ or more, still more preferably $50\ \mu m$ or more. In addition, the thickness is more preferably $200\ \mu m$ or less, still more preferably $150\ \mu m$ or less, and particularly preferably $100\ \mu m$ or less.

The outer diameter of the hollow fiber membrane is preferably $50\ \mu m$ to $2500\ \mu m$ from the viewpoint of achieving both an effective membrane area when the hollow fiber membrane is filled in a module and membrane strength. The outer diameter of the hollow fiber membrane is more preferably $100\ \mu m$ or more, still more preferably $200\ \mu m$ or more, particularly preferably $300\ \mu m$ or more. The outer diameter is more preferably $1000\ \mu m$ or less, still more preferably $500\ \mu m$ or less, and particularly preferably $450\ \mu m$ or less.

From the relationship between the pressure loss of the fluid flowing through the hollow portion and the buckling pressure, the inner diameter of the hollow fiber membrane is preferably $20$ to $1000\ \mu m$. The inner diameter of the hollow fiber membrane is more preferably $50\ \mu m$ or more, still more preferably $100\ \mu m$ or more, particularly preferably $150\ \mu m$ or more. The inner diameter is more preferably $500\ \mu m$ or less, still more preferably $300\ \mu m$ or less, and particularly preferably $250\ \mu m$ or less.

From the relationship between the pressure loss of the fluid flowing through the hollow portion and the buckling pressure, the hollowness of the hollow fiber membrane is preferably $15$ to $70\%$. The hollowness is more preferably $20\%$ or more, still more preferably $25\%$ or more. The hollowness is more preferably $60\%$ or less, still more preferably $50\%$ or less, particularly preferably $40\%$ or less.

The method of setting the outer diameter, the inner diameter, and the hollowness of the hollow fiber in the hollow fiber membrane within the above-described ranges is not particularly limited, and can be adjusted, for example, by appropriately changing the shape of the discharge hole of the spinneret for manufacturing the hollow fiber, or the draft ratio that can be calculated by the winding speed/the discharge speed.

(Observation of membrane surface)

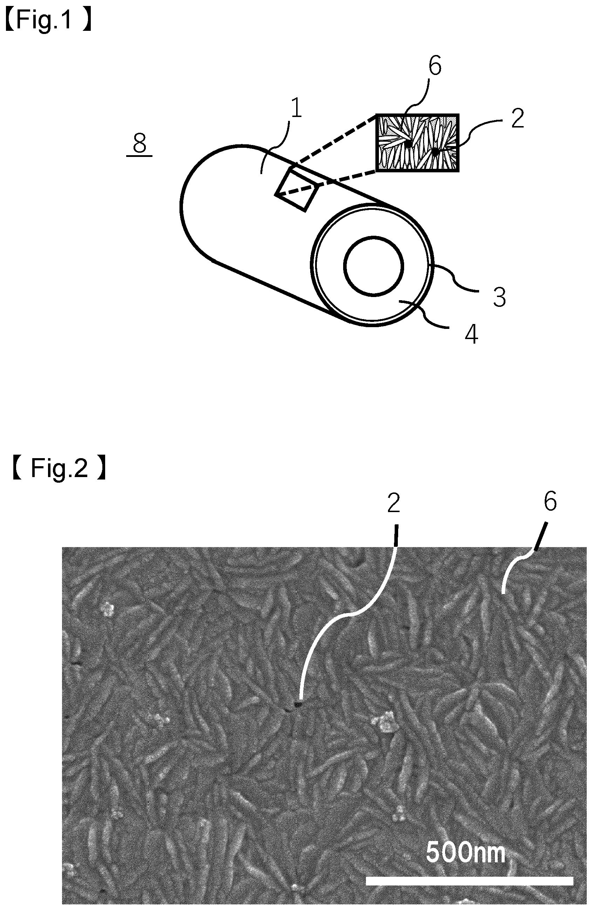

The separation membrane of the present embodiment includes lamellar crystals accumulated on at least one surface layer, and has opening portions that selectively permeate gas between the lamellar crystals and the lamellar crystals on the membrane surface. The surface of the surface layer is referred to as a membrane surface, and the opening portions in a two-dimensional membrane surface are expressed as opening portions and in a thick surface layer as micropores. Fig. 1 is a schematic view (enlarged view) schematically showing a membrane surface of a hollow fiber separation membrane. In the hollow fiber membrane 8, the membrane surface 1 having accumulated lamellar crystals may be on the outer surface side or the inner surface side of the hollow structure, or may be on both the outer surface and the inner surface.

The accumulated lamellar crystals 6 refer to a portion in which the ratio of the lamellar crystals 6 is 10% or more when the surface area excluding the micropores, that is, the opening portions 2 is 100% in a case in which the membrane surface 1 of the separation membrane is observed at a magnification of 60,000 times using a scanning electron microscope (hereinafter, it is referred to as "SEM"). The lamellar crystal 6 refers to a streaky convex portion, that is, a streaky bright portion in an image obtained by observing the surface of the separation membrane at a magnification of 60,000 times using SEM. The opening portion 2 refers to a recess having a diameter of 1 nm to 10 μm when the membrane surface 1 of the separation membrane is observed with a SEM at a magnification of 60,000 times.

Fig. 2 shows an example of an image obtained by imaging the membrane surface 1 of the separation membrane with a SEM at a magnification of 60,000 times. In Fig. 2, in the lamellar crystals 6 of the present invention, a large number of crystal chains are densely gathered, and the lamellar crystals are adjacently formed and accumulated. The opening portions 2 are present in the accumulated lamellar crystal group.

The ratio of the lamellar crystals to the area of the membrane surface excluding the opening portions can be obtained by observing the membrane surface using SEM, and calculating the area ratio of the lamellar crystals 6 in the entire observation image and the area ratio of the opening portions 2, that is, the opening ratio from the obtained image. The micropores of 1 nm or more, that is, the opening portions 2 in the membrane surface can be obtained by observing the surface 1 of the separation membrane using SEM, binarizing the obtained image with image analysis software "ImageJ", and then extracting only the pores having a diameter of more than 1 nm. A specific calculation method will be described in detail in Examples.

As shown in Fig. 2, streaky lamellar crystals grow on the membrane surface 1 of the separation membrane of the present embodiment. The lamellar crystal has a structure in which molecular chains of PMP are folded and accumulated in a plate shape, and exhibits excellent solvent resistance. For example, in Fig. 2, streaky lamellar crystals each represented by a bright portion are observed as convex portions, and forms a lamellar structure in which several lamellar crystal groups are closely accumulated. On the other hand, between the lamellar crystal and the lamellar crystal, there are opening portions 2 having an average pore size of 3 nm or more and 30 nm or less, that is, micropores. Since the opening portions selectively permeate gas, a separation membrane having a membrane surface having both high gas permeability and solvent resistance is obtained. When the separation membrane has a hollow fiber shape, the surface layer and the membrane surface 1 having the accumulated lamellar crystals are preferably outer surfaces.

(Lamellar crystal on membrane surface)

In the separation membrane of the present invention, it is important that the ratio of lamellar crystals to the total area of the membrane surface excluding the opening portions 2 in the membrane surface 1 having accumulated lamellar crystals is 10% to 60%. It is preferable that the ratio of the lamellar crystals is 10% or more from the viewpoint of obtaining high solvent resistance, and it is preferable that the ratio of the lamellar crystals is 60% or less since gas permeability in portions other than the opening portions is improved. The ratio of the lamellar crystals is more preferably 20% to 60%, still more preferably 25% to 55%, and particularly preferably 30% to 40%.

The period of the lamellar crystal on the membrane surface 1 of the present invention is preferably 10 nm to 80 nm. The period of the lamellar crystal refers to the distance from the streaky convex portion to the nearest streaky convex portion in an image obtained by observing the surface of the separation membrane at a magnification of 30,000 times using SEM. As the period of the lamellar crystal is smaller, the degree of accumulation of the lamellar crystals tends to be higher. When the period of the lamellar crystal is 10 nm or more, solvent resistance is improved, which is preferable. When the period of the lamellar crystal is 80 nm or less, gas permeability in portions other than the opening portions is improved, which is preferable. The period of the lamellar crystal is more preferably 20 nm to 50 nm, still more preferably 25 nm to 45 nm, and particularly preferably 30 nm to 45 nm. A specific method for measuring the period of the lamellar crystal will be described in detail in Examples.

(Degree of crystallinity of membrane surface)

In the separation membrane of the present invention, the degree of crystallinity on the membrane surface 1 is preferably 5% to 35%. In the present invention, since the thickness of the membrane surface 1 is very small, the degree of crystallinity of the membrane surface 1 coincides with the crystallinity of the surface layer 3. When the degree of crystallinity on the membrane surface 1 is 5% or more, solvent resistance is improved, and when the degree of crystallinity is 35% or less, permeability in portions other than the opening portions is improved. The degree of crystallinity at the membrane surface 1 is a value determined by infrared spectroscopy (hereinafter, it may be referred to as "IR"), and a specific measurement method will be described in Examples. The degree of crystallinity of the membrane surface 1 is more preferably 15% to 35%, still more preferably 20% to 35%, and particularly preferably 30% to 35%.

(Opening portions of membrane surface)

In the separation membrane of the present invention, it is important that the average pore size of the opening portions 2, that is, the micropores on the membrane surface 1 is 3 nm to 30 nm. In Figs. 1 and 2, the opening portions 2 on the membrane surface indicated by the dark portion exists without inhibiting the characteristics of each lamellar crystal 6 of the lamellar crystals 6 that are accumulated. It is preferable that the average pore size of the opening portions in the membrane surface 1 is 3 nm or more from the viewpoint of obtaining high gas permeability, and it is preferable that the average pore size is 30 nm or less from the viewpoint of obtaining good solvent resistance. The average pore size of the opening portions 2, that is, the micropores on the membrane surface 1 is more preferably 3 to 20 nm, still more preferably 3 to 18 nm, and particularly preferably 3 nm to 16 nm. A specific method of calculating the average pore size will be described in detail in Examples.

In addition, it is important that the opening ratio on the membrane surface 1 is 0.1% to 10%. The opening ratio is a ratio of the total area of the micropores to the area of the membrane surface, and is expressed as a ratio when the area obtained by projecting the membrane surface is 100%. That is, the opening ratio refers to an area ratio of the opening portions to the entire observation image when the surface of the hollow fiber membrane is observed with a SEM at a magnification of 60,000 times. It is preferable that the opening ratio on the membrane surface 1 is 0.1% or more from the viewpoint of obtaining high gas permeability, and is 10% or less from the viewpoint of obtaining good solvent resistance. The opening ratio on the membrane surface 1 is more preferably 0.2% to 5.0%, still more preferably 0.5% to 2.0%, and particularly preferably 1.0% to 1.5%. A specific method of calculating the opening ratio will be described in detail in Examples.

The number of the opening portions 2 on the membrane surface 1 is preferably $1.0/\mu m^2$ to $20000/\mu m^2$. It is preferable that the number of the opening portions is $1.0/\mu m^2$ or more from the viewpoint of obtaining high gas permeability, and is $20000/\mu m^2$ or less from the viewpoint of obtaining good solvent resistance. The number of the opening portions is more preferably $10/\mu m^2$ to $10000/\mu m^2$, still more preferably $50/\mu m^2$ to $5000/\mu m^2$, and particularly preferably $100 \mu m^2$ to $2000/\mu m^2$. A specific method of calculating the number of opening portions per certain area will be described in detail in Examples.

In addition, in the membrane surface 1, the value obtained by dividing the opening ratio (%) by the number of the opening portions 2 per certain area (number/$\mu m^2$): D is preferably 0.1 (%·$\mu m^2$/number) or less. D is an index of an area occupied per opening portion, that is, a size per opening portion. When D is 0.1 or less, entry of a solvent into the membrane is suppressed, and solvent resistance is improved. D is more preferably 0.05 or less, still more preferably 0.03 or less, and particularly preferably 0.01 or less.

In the separation membrane of the present invention, lamellar crystals on the membrane surface 1 are in an accumulated state with an area ratio of 10% or more and 60% or less and a period of 10 nm or more and 80 nm or less, and the degree of crystallinity of the surface is 5% or more and 35% or less, which is preferable from the viewpoint of obtaining higher solvent resistance. On the other hand, due to high solvent resistance, since the membrane surface having the lamellar crystals accumulated is covered with the plate-like crystals, the gas is shielded, and the gas permeability tends to deteriorate. In the separation membrane of the present invention, there are $1/\mu m^2$ or more opening portions 2 having an average pore size of 3 nm or more and 30 nm or less between the lamellar crystal and the lamellar crystal, and the opening portions 2 exhibit gas permeability. However, when the area occupied by the opening portions 2 is more than $20000/\mu m^2$, entry of a solvent into the membrane is less likely to be suppressed, so that solvent resistance is likely to decrease. As described above, the separation membrane of the present invention has lamellar crystals accumulated on the surface layer, and has micropores on the membrane surface, in which the average pore size of the micropores is 3 nm to 30 nm, the opening ratio is 0.1% to 10%, and the number of pores on the membrane surface is $1/\mu m^2$ or more, so that a membrane surface having both high gas permeability and solvent resistance is obtained.

(Observation of membrane cross section)

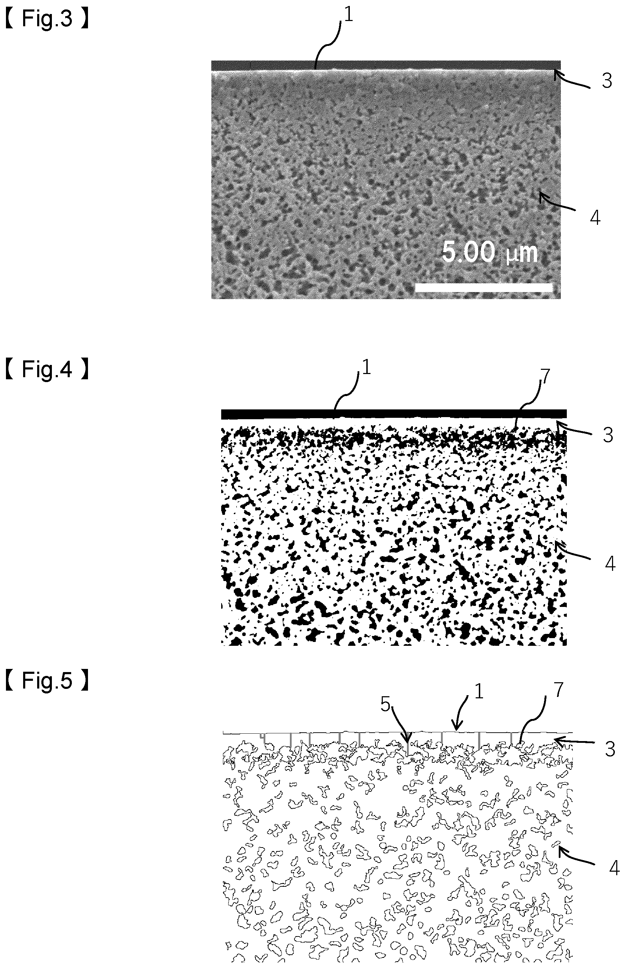

The separation membrane of the present embodiment has a dense layer on the surface layer 3 on the side where the membrane surface 1 exists. As shown in Fig. 3, the separation membrane has a surface layer 3 and an inner layer 4 below the surface layer 3. The surface layer 3 refers to a portion where a straight line perpendicular to the surface is drawn from an arbitrary point on the surface of the separation membrane toward the other surface side (inner layer side) in a case where a cross section cut in the thickness direction of the separation membrane is observed at a magnification of 10,000 times using a scanning electron microscope (SEM), and the straight line reaches a pore exceeding 50 nm for the first time. The inner layer 4 is a layer present below the surface layer 3. That is, the surface layer 3 is a layer that does not have pores exceeding 50 nm and is denser than the inner layer.

The thickness of the surface layer 3 can be obtained, for example, by applying stress to the separation membrane sufficiently cooled in liquid nitrogen (using a razor blade, a microtome, or a broad ion beam as necessary), observing a cross section perpendicular to the longitudinal direction of the separation membrane and parallel to the film thickness direction (hereinafter, it is referred to as a "transverse cross section") or a cross section parallel to the longitudinal direction of the separation membrane and parallel to the membrane thickness direction (hereinafter, it is referred to as a "longitudinal cross section") using a scanning electron microscope (SEM), binarizing the obtained image with image analysis software "ImageJ", then extracting only pores larger than 50 nm, drawing a straight line perpendicularly from the membrane surface 1, and measuring the distance to the pores.

The transverse cross-section of the hollow fiber membrane is synonymous with the radial cross section. The longitudinal direction of the hollow fiber membrane is a direction perpendicular to the transverse direction of the hollow fiber membrane. The transverse direction of the hollow fiber membrane is a direction parallel to the radial direction of the hollow fiber membrane, and the transverse direction can be rephrased as a direction parallel to the hollow surface, that is, an in-plane direction of the hollow surface. Therefore, the longitudinal direction of the hollow fiber membrane can be rephrased as a direction perpendicular to the hollow surface. The thickness of the surface layer is a length from an arbitrary point on the membrane surface of the separation membrane to the inner layer side when a straight line is drawn perpendicularly to the outer surface in the SEM image described above, until the surface layer reaches a pore exceeding 50 nm for the first time, and a specific measurement method will be described in detail in Examples.

The separation membrane of the present invention is a porous membrane, and has voids in the inner layer 4. In the separation membrane of the present embodiment, it is preferable that the number of voids larger than 10 $\mu$m per visual field is 3 or less when the radial cross section or the longitudinal cross section is observed at a magnification of 2,000 times using SEM. Voids larger than 10 $\mu$m are often present in the inner layer 4. The void refers to a recess having a diameter of 10 nm or more when a radial cross section or a longitudinal cross section of the separation membrane is observed at a magnification of 2,000 times using SEM. The recess is a pore, and is indicated by the size of the diameter of the approximate sphere. When the number of voids larger than 10 $\mu$m in the membrane cross section is 3 or less, the strength of the separation membrane is improved. The voids of 10 $\mu$m or more in the membrane cross section can be obtained by observing the transverse cross section or the longitudinal cross section of the separation membrane at a magnification of 2,000 times using SEM, binarizing the obtained image with image analysis software "ImageJ", and then extracting only pores having an average diameter of more than 10 $\mu$m.

The number of voids larger than 10 $\mu$m in the membrane cross section is more preferably 2 or less, still more preferably 1 or less, and particularly preferably 0. A method for measuring a void larger than 10 $\mu$m in the membrane cross section will be described in detail in Examples.

In the inner layer of the separation membrane of the present embodiment, the average pore size of voids is preferably 100 nm to 1000 nm when a membrane cross section is observed using SEM. The average pore size of voids in the membrane cross section can be obtained by observing the transverse cross section or the longitudinal cross section of the separation membrane at a magnification of 10,000 times using SEM, binarizing the obtained image with image analysis software "ImageJ", and then extracting pores having an average diameter of more than 10 nm. When the average pore size of the membrane cross section is 100 nm or more, the permeability is improved, and when the average pore size is 1000 nm or less, the strength of the separation membrane is improved. The average pore size of voids in the membrane cross section is preferably 100 nm to 800 nm, more preferably 100 to 600 nm, still more preferably 100 nm to 570 nm, and particularly preferably 100 to 500 nm.

The voids may have any geometric shape, such as a long, cylindrical, circular, or more or less irregular shape. The shape of the pore can be evaluated by cutting the separation membrane sufficiently cooled in liquid nitrogen using a microtome, observing the exposed cross section using a SEM, and determining the ratio a/b of the major axis length a to the minor axis length b of the pore. When the separation membrane has a flat membrane shape, the separation membrane is cut in a direction in which the Young's modulus is maximum and parallel to the thickness direction of the membrane. When the separation membrane has a hollow fiber shape, the direction in which the Young's modulus is maximized is a direction parallel to the longitudinal direction of the membrane, and the longitudinal cross section of the hollow fiber membrane is observed. A specific measurement method of a/b will be described in detail in Examples.

In the separation membrane of the present embodiment, when the separation membrane is stretched, both the surface layer and the inner layer are stretched. When the membrane is stretched, the length a of the long axis tends to increase. The ratio a/b can be easily adjusted by a balance between the resin extrusion speed and the take-up tension, stretching, or the like. For example, in order to adjust the ratio of a/b to be large, the ratio can be easily adjusted by decreasing the resin extrusion speed, increasing the take-up tension, and increasing the stretch ratio. In the separation membrane of the present embodiment, a/b correlates with the opening ratio and the average pore size of the membrane surface.

In the separation membrane of the present embodiment, the direction of the long axis length a of the pore tends to be a direction parallel to the direction in which the Young's modulus is maximized. That is, the direction of the long axis length a of the pore is substantially parallel to the direction in which the Young's modulus is maximized and the longitudinal direction of the membrane when the separation membrane has a hollow fiber shape. In the separation membrane of the present embodiment, a/b is preferably 1.0 to 5.0. When a/b is 5.0 or less, the average pore size, the opening ratio, and the number of pores on the membrane surface fall within preferable ranges, and a membrane surface having both high gas permeability and solvent resistance is obtained. a/b is more preferably 1.5 to 4.0, still more preferably 2.0 to 3.5, and particularly preferably 2.5 to 3.0.

In addition, the separation membrane of the present embodiment preferably has a porosity of 25% to 60% when a cross section of the membrane is observed with a SEM. The porosity is a ratio of micropores in the membrane cross section, and is expressed as a ratio of pores when an area obtained by projecting the membrane cross section is 100%. That is, it refers to the area ratio of pores as voids to the entire observation image when the membrane cross section of the separation membrane is observed at a magnification of 10,000 times using SEM. When the porosity in the membrane cross section is 25% or more, it is preferable from the viewpoint of obtaining high gas permeability, and when the porosity is 60% or less, the membrane strength is improved. The porosity in the membrane cross section is more preferably 30 to 55%, still more preferably 35 to 50%, and particularly preferably 40 to 50%. A specific method of calculating the porosity of the membrane cross section will be described in detail in Examples.

(Porosity)

In the separation membrane of the present invention, the overall porosity of the separation membrane is 30% or more and 70% or less. When the porosity is 30% or more, the permeability is improved and when the porosity is 70% or less, the membrane strength is improved. The porosity is preferably 40% or more and 65% or less, more preferably 45% or more and 60% or less, and particularly preferably 53% or more and 60% or less. In order to obtain a porosity in such a range, structure formation using thermally-induced phase separation described later is preferably used. The porosity of the present application refers to the overall porosity including the surface layer and the inner layer of the separation membrane, and a specific method for measuring the porosity will be described in detail in Examples.

(Gas permeability)

The separation membrane of the present invention preferably has $N_2$ permeability of 1000 GPU or more at 100 kPa and 37°C. The $N_2$ permeability is more preferably 3000 GPU or more, and still more preferably 50000 GPU or more. The calculation method will be described in detail in Examples.

(Separation coefficient $\alpha$ ($CO_2/N_2$))

Since the separation membrane of the present invention has a lamellar crystal on the membrane surface and has openings, the separation membrane has both solvent resistance and high gas permeability, and due to the pore size of the opening portion, gas permeation is mainly performed by "Knudsen diffusion". On the other hand, in the non-porous structure, since there is no through hole, gas permeability is reduced, but gas permeation is performed by a dissolution-diffusion mechanism. That is, the denseness of the membrane surface can be evaluated by the gas separation coefficient, and in a membrane having high denseness, the efficiency of degassing and gas exchange tends to decrease.

In general, the permeation in a polymer membrane depends on the pore size in the membrane. In a porous membrane having pores with a size of 3 nm to 10 $\mu$m in the membrane, gas permeates mainly by "Knudsen diffusion". In this case, the permeation coefficient P of the two gases or the separation coefficient $\alpha$ indicating the ratio of the permeation flow rates Q of the gases is obtained by the square root of the ratio of the molecular weights of the gases. Therefore, for example, the separation coefficient $\alpha(CO_2/N_2)$ for $CO_2$ and $N_2$ is $\sqrt{28}/\sqrt{44} = 0.80$.

On the other hand, in a membrane in which the diameter of pores in the membrane is at most 3 nm, the gas permeates through the dissolution-diffusion mechanism. In this case, the separation factor $\alpha$ depends only on the polymer material and does not depend on the film thickness. Therefore, $\alpha(CO_2/N_2)$ can be expressed as $P(CO_2)/P(N_2)$ or $Q(CO_2)/Q(N_2)$. Commonly used polymers produce $\alpha(CO_2/N_2)$ values of at least 1 or more. In the case of the dissolution-diffusion mechanism, permeability of gas is reduced, and thus when $\alpha(CO_2/N_2)$ is 1 or less, efficiency of degassing and gas exchange is improved, which is preferable.

When the gas permeates the non-porous membrane, the permeability coefficient of the gas decreases, but the gas separation coefficient increases. Therefore, the pore size of the pores that govern the gas permeability of the membrane of the present invention can be read by the gas separation factor $\alpha(CO_2/N_2)$ measured for $CO_2$ and $N_2$. If the gas separation factor $\alpha(CO_2/N_2)$ is greater than 1.0, the membrane has a non-porous structure. When the separation membrane has a non-porous structure, the efficiency of degassing and gas exchange is reduced, which is not suitable for use. On the other hand, when the gas separation factor $\alpha(CO_2/N_2)$ is 1.0 or less, this membrane has high degassing or gas exchange performance. Therefore, the gas separation factor $\alpha(CO_2/N_2)$ of the membrane according to the present invention is preferably 0.8 to 1.0.

(Gas permeability after immersion in organic solvent)

In the separation membrane of the present invention, the $N_2$ permeability X at a differential pressure of 100 kPa and 37°C after immersing the separation membrane in chloroform/isopropyl alcohol = 1/1 (volume/volume) for 3 seconds is preferably 5 GPU or more. When the value of X is 5 GPU or more, solvent resistance is improved. The value of X is more preferably 10 GPU or more, still more preferably 200 GPU or more, and particularly preferably 400 GPU or more.

(Method for manufacturing separation membrane)

The separation membrane of the present invention can be produced by the following Method A or Method B. For each of the steps of Method A and Method B, in the case of Method A, there are the following steps (A1) and (A2), preferably steps (A1) to (A3), and in the case of Method B, there are the following steps (B1) to (B3). The respective steps are as follows.

<Method A>

(A1): Preparation step
(A2): Forming step
(A3): Washing step

<Method B>

(B1): Preparation step
(B2): Forming step
(B3): Washing step

Hereinafter, each step of Method A will be described.

(A1) Preparation step

This is a preparation step of melt-kneading a mixture containing 10 mass% to 50 mass% of poly(4-methyl-1-pentene) and 50 mass% to 90 mass% of a plasticizer to obtain a resin composition.

In the preparation step of obtaining a resin composition, a mixture containing 10 mass% to 50 mass% of PMP and 50 mass% to 90 mass% of a plasticizer is melt-kneaded. The mixture preferably contains 15 mass% to 50 mass% of PMP and 50 mass% to 85 mass% of a plasticizer, more preferably 20 mass% to 45 mass% of PMP and 55 mass% to 80 mass% of a plasticizer, and particularly preferably 25 mass% to 40 mass% of PMP and 60 mass% to 75 mass% of a plasticizer.

As an apparatus used for melt-kneading the mixture, a kneader, a roll mill, a Banbury mixer, or a mixer such as a uniaxial or biaxial extruder can be used. Among them, the use of a twin-screw extruder is preferable from the viewpoint of improving uniform dispersibility of the plasticizer, and the use of a twin-screw extruder with vent holes is more preferable from the viewpoint of being able to remove volatiles such as moisture and low molecular weight substances. In addition, from the viewpoint of enhancing the kneading strength and improving the uniform dispersibility of the plasticizer, it is preferable to use a twin-screw extruder including a screw having a kneading disk part.

The resin composition obtained in the preparation step may be pelletized once and melted again to be used for melt film formation, or may be directly led to a spinneret to be used for melt film formation. When pellets are pelletized once, it is preferable to use a resin composition in which the pellets are dried to adjust the water content to 200 ppm (mass basis) or less. When the water content is 200 ppm (mass basis) or less, deterioration of the resin can be prevented.

(A2) Forming step

This is a forming step of discharging the resin composition obtained in A1 from a discharge spinneret, and introducing the resin composition into a cooling bath of a solvent in which a solubility parameter distance Ra to poly(4-methyl-1-pentene) is in the range of 4.0 to 14.0 and a solubility parameter distance Rb to the plasticizer is in the range of 3.0 to 6.0 immediately after passing through an idle running part to obtain a resin formed product. In the forming step of obtaining a resin composition, a hollow fiber membrane is obtained from a molten mixture of a resin composition of PMP and a plasticizer by utilizing phase separation. As an example, the step is a step of discharging the resin composition obtained in the preparation step (A1) into a gas atmosphere from, for example, a discharge spinneret having a double annular nozzle in which a gas flow path is disposed in a central portion, and introducing the resin composition into a cooling bath to phase-separate the resin composition, thereby obtaining a resin formed product.

As a specific method, the hollow portion forming gas is discharged from the inner ring of the double tubular spinneret while the resin composition in a molten state is discharged from the tube outside the double annular nozzle for spinning. At this time, it is important that the discharge gap of the discharge spinneret is 0.05 mm to 0.30 mm. It is presumed that when the discharge gap of the discharge spinneret is in this range, high shear is imparted to the resin composition in a molten state, whereby crystallization easily occurs, and the formation of lamellar crystals is promoted. The resin composition thus discharged is allowed to run in air, and then cooled and solidified in a cooling bath to obtain a resin formed product. The discharge gap of the discharge spinneret is more preferably 0.05 mm to 0.20 mm.

In addition, it is preferable that the resin composition discharged from the discharge spinneret is exposed to a gaseous atmosphere that promotes evaporation of the plasticizer before cooling, that is, an atmosphere in which evaporation of the plasticizer can occur, on at least one of the surfaces, preferably a surface on which lamellar crystals are to be formed. The gas used for forming the gaseous atmosphere is not particularly limited, but air or nitrogen is preferably used. The gaseous atmosphere generally has a temperature lower than the discharge spinneret temperature. It is important that the distance from the spinneret surface to the solvent surface is 10 mm to 30 mm in order to form a surface layer in which lamellar structures accumulate and opening portions are provided. In the present application, the "distance from the spinneret surface to the solvent surface" is referred to as "air gap distance". The air gap distance is preferably 10 mm to 20 mm, and more preferably 10 mm to 15 mm.

Here, a cooling bath for cooling the resin composition discharged from the discharge spinneret will be described. In the production of the separation membrane of the present application, the structure of the membrane surface is affected by the type of solvent in the cooling bath. Therefore, the solvent of the cooling bath is preferably selected from the affinity with PMP and the plasticizer.

In the case of producing the separation membrane by Method A, it is important to use, as a solvent for the cooling bath, a solvent having a solubility parameter distance Ra to PMP in the range of 4.0 to 14.0 and a solubility parameter distance Rb to the plasticizer in the range of 3.0 to 6.0.

In the resin composition introduced into the cooling bath, structure formation proceeds by solvent exchange between the plasticizer and the cooling bath solvent. At this time, when a solvent having a small solubility parameter distance Ra to PMP, that is, having high affinity with PMP is used, phase separation between PMP and the plasticizer hardly proceeds, so that the membrane surface of the resulting separation membrane has a dense non-porous structure. Alternatively, even when a solvent having a large solubility parameter distance Rb with respect to the plasticizer, that is, having low affinity with the plasticizer is used, a dense non-porous structure is formed on the resulting membrane surface due to low exchange efficiency between the solvent and the plasticizer. Therefore, when a solvent having a larger Ra and a smaller Rb is used as the solvent of the cooling bath, the phase separation between PMP and the plasticizer rapidly proceeds, and the solvent and the plasticizer are rapidly exchanged, so that a membrane having a porous surface is obtained.

On the other hand, the structure of the membrane surface is also affected by the cooling rate of the resin composition. When the resin composition is slowly cooled, lamellar crystals excessively grow, and formation of opening portions in a cooling bath does not proceed. Therefore, in order to form a membrane surface having opening portions on the surface, it is important to set the discharge gap and the air gap distance to prescribed ranges and rapidly cool the resin composition. The present inventors have found that when the molten resin composition is rapidly cooled under conditions in which a discharge gap is 0.05 mm to 0.30 mm and an air gap distance is 10 mm to 30 mm, and immediately thereafter, the resin composition is introduced into a cooling bath of a solvent in which Ra is in a range of 4.0 to 14.0 and Rb is in a range of 3.0 to 6.0, fine opening portions that can prevent entry of the solvent into the membrane can be formed on the membrane surface 1 having the accumulated lamellar crystals.

In the case of producing the separation membrane by Method A, the stability of spinning is improved when Ra is 4.0 or more. The range of Ra is more preferably 5.0 to 12.0, still more preferably 6.0 to 10.0, and particularly preferably 7.0 to 9.0. When the range of Rb is 6.0 or less, a membrane surface having fine opening portions is obtained. The range of Rb is more preferably 3.0 to 5.0, and particularly preferably 3.0 to 4.0. The affinity of PMP for the solvent of the cooling bath can be estimated by the three-dimensional Hansen solubility parameter as described in the literature (Ind. Eng. Chem. Res. 2011,50,3798-3817.). Specifically, the smaller the solubility parameter distance (Ra) in Equation (1) described below, the higher the affinity of the solvent for PMP.

[Mathematical formula 1]

$$\mathrm{Ra} = \sqrt{4(\delta_{Ad} - \delta_{Cd})^2 + \left(\delta_{Ap} - \delta_{Cp}\right)^2 + \left(\delta_{Ah} - \delta_{Ch}\right)^2} \qquad ...\ \text{Equation (1)}$$

Here, $\delta_{Ad}$ $\delta_{Ap}$, and $\delta_{Ah}$, are a dispersion term, a polarity term, and a hydrogen bond term of the solubility parameter of PMP, and $\delta_{Cd}$, $\delta_{Cp}$, and $\delta_{Ch}$ are a dispersion term, a polarity term, and a hydrogen bond term of the solubility parameter of the solvent.

The affinity between the plasticizer and the solvent of the cooling bath can also be estimated in a similar manner. Specifically, the smaller the solubility parameter distance (Rb) in Equation (2) described below, the higher the affinity of the solvent for the plasticizer.

[Mathematical formula 2]

$$\mathrm{Rb} = \sqrt{4(\delta_{Bd} - \delta_{Cd})^2 + \left(\delta_{Bp} - \delta_{Cp}\right)^2 + \left(\delta_{Bh} - \delta_{Ch}\right)^2} \qquad ...\ \text{Equation (2)}$$

Here, $\delta_{Bd}$, $\delta_{Bp}$, and $\delta_{Bh}$ are a dispersion term, a polarity term, and a hydrogen bond term of the solubility parameter of PMP, and $\delta_{Cd}$, $\delta_{Cp}$, and $\delta_{Ch}$ are a dispersion term, a polarity term, and a hydrogen bond term of the solubility parameter of the solvent.

When the solvent is a mixed solvent, the solubility parameter ($\delta_{Mixture}$) of the mixed solvent can be determined by the following Equation (3).

[Mathematical formula 3]

$$\delta_{Mixture} = \sum \Phi_i \delta_i \qquad ...\ \text{Equation (3)}$$

Here, $\varphi_i$ and $\delta_i$ are a volume fraction and a solubility parameter of the component i, and satisfy a dispersion term, a polarity term, and a hydrogen bond term, respectively. Here, the "volume fraction of the component i" refers to the ratio of the volume of the component i before mixing to the sum of the volumes of all the components before mixing. As the three-dimensional Hansen solubility parameter of the solvent, this value was used when it is described in the literature [Ind. Eng. Chem. Res. 2011, 50, 3798 -3817.]. For solvent parameters not described, values contained in the software "Hansen Solubility Parameter in Practice" developed by Charles Hansen et al. were used. The three-dimensional Hansen solubility parameter of a solvent or polymer not described in the software can be calculated by the Hansen sphere method using the software.

In the case of producing the separation membrane by Method A, when dibutyl phthalate is used as the plasticizer, the solvent used for the cooling bath in the forming step is preferably Benzoflex (Benzoflex (registered trademark)) manufactured by Eastman, dioctyl phthalate, n-undecylbenzenesulfonic acid, diisononyl phthalate, butyl benzoate, tocopherol, methylene chloride, butyl benzyl phthalate, diisodecyl phthalate, dimethyl isosorbide, mono (2-ethylhexyl) phthalate, methyl ethyl ketone, methyl propyl ketone, tributyl phosphate, 1,4-dioxane, ditridecyl phthalate, methyl isoamyl ketone, 1-nitropropane, cyclopentyl methyl ether, N-methylpyrrolidone, sorbitan monooleate, tetrahydrofuran, propylene glycol monostearate, n-butyl propionate, methyl isobutyl ketone, 1,3-dioxolane, n-propyl propanoate, acetone, benzyl benzoate, dibasic esters, glyceryl palmitostearate, methyl oleate, butyl glycol acetate, ascorbyl palmitate, methyl acetate, and ethyl acetate. Among these, dioctyl phthalate is more preferred since Ra and Rb are within the above-mentioned particularly preferred ranges.

In the forming step for manufacturing the separation membrane of the present invention, the resin composition discharged from the discharge spinneret is wound up by a winding device. In this case, it is preferable that the value of the draft ratio calculated by (winding speed)/(discharge speed from discharge spinneret) by the winding device is 1 to 10. The value of the draft ratio is more preferably 1 to 8. When the draft ratio is 1 or more, winding is stabilized, and fluctuation in the yarn shape is reduced. When the draft ratio is 10 or less, it is possible to suppress excessive stretching of the resin composition discharged from the spinneret, and to suppress generation of defects on the surface of the hollow fiber membrane.

### (A3) Washing step

The obtained resin formed product does not dissolve the polymer as necessary, but by immersing the resin formed product in a solvent miscible with the plasticizer, the plasticizer can be extracted and the porosity can be increased. The washing step is a step of introducing the resin formed product into a solvent in which the solubility parameter distance Ra to PMP is in the range of 8 to 35 and the solubility parameter distance Rb to the plasticizer is in the range of 5 to 35, and extracting the plasticizer contained in the resin formed product into the solvent to obtain a separation membrane. At this time, by using a solvent or a mixed solvent having appropriate affinity with each of the polymer and the plasticizer, good solvent exchange is performed, and the washing efficiency is increased.

When the solubility parameter distance Ra of the washing solvent to PMP is 8 or more, the shape stability of the resin composition is improved, and when the solubility parameter distance Ra is 35 or less, the resin composition is moderately swollen, and the washing efficiency is high. The range of Ra is preferably 10 to 25, and particularly preferably 12 to 22. When the solubility parameter distance Rb of the washing solvent with respect to the plasticizer is 35 or less, good solvent exchange is performed, and the washing efficiency is increased. The range of Rb is preferably 10 to 25, and particularly preferably 12 to 22.

When dibutyl phthalate is used as the plasticizer, the solvent used in the washing step is preferably methyl isobutyl ketone, acetone, butyl acetate glycol, methyl acetate, propylene glycol monoethyl ether acetate, Benzoflex (Benzoflex (registered trademark)) manufactured by Eastman, N, N-dimethylacetamide, dipropylene glycol monobutyl ether, diethylene glycol monobutyl ether, t-butyl acetate, propylene glycol monomethyl ether acetate, diacetone alcohol, $\varepsilon$-caprolactone, isopropyl acetate, sec-butyl acetate, propylene glycol monobutyl ether, texanol, $\gamma$-butyrolactone, tetra-hydrofurfuryl alcohol, N, N-dimethylformamide, dipropylene glycol methyl ether, propylene glycol monomethyl ether, triethyl citrate, methyl carbitol, ethyl lactate, ethylene glycol monobutyl ether, dimethylcyclohexane, benzyl alcohol, dimethyl sulfoxide, propylene carbonate, cyclohexanol, glycerol diacetate, isopentyl alcohol, 2-phenoxyethanol, heptane, acetonitrile, n-amyl alcohol, methyl isobutyl carbinol, tetramethylene sulfone, hexane, VM & P naphtha, hexylene glycol, ethylene glycol monomethyl ether, 2-butanol, t-butyl alcohol, 1-butanol, ethylene carbonate, isopropyl alcohol, isobutanol, 1-propanol, dipropylene glycol, ethanol, propylene glycol, methanol, glycerol carbonate, and ethylene glycol, and among them, methanol, ethanol, and isopropyl alcohol are more preferable since Ra and Rb are within the above-mentioned particularly preferable ranges.

The resin product during the washing step is stretched during the step as necessary to cleave between the lamellar structure and the lamellar structure, whereby the pore size and the opening ratio of the membrane surface can be further controlled. In order to improve gas permeability by effective opening, the stretch ratio is preferably 1.1 times or more. On the other hand, when the area occupied by the opening portions increases, entry of the solvent into the membrane is less likely to be suppressed, so that solvent resistance is likely to decrease. Therefore, the stretch ratio is preferably 5.0 times or less. The stretch ratio is more preferably 1.2 to 3.0, and particularly preferably 1.5 to 2.0.

The temperature of the washing solvent is preferably 10 to 50°C. When the temperature is 10°C or more, the flexibility of the resin formed product is improved, and when the temperature is 50°C or lower, the structure of the membrane surface is maintained. The temperature of the washing solvent is more preferably 20 to 45°C, and particularly preferably 25 to 40°C.

Next, each step of Method B for obtaining the separation membrane of the present invention will be described.

### (B1) Preparation step

This is a preparation step of melt-kneading a mixture containing 10 mass% to 50 mass% of poly(4-methyl-1-pentene) and 50 mass% to 90 mass% of a plasticizer to obtain a resin composition. The preparation step (B1) of obtaining a resin composition can be performed in the same manner as the preparation step (A1) of Method A.

### (B2) Forming step

This is a forming step of discharging the resin composition obtained in B1 from a discharge spinneret, and introducing the resin composition into a cooling bath of a solvent in which a solubility parameter distance Ra to poly(4-methyl-1-pentene) is in the range of 5.0 to 18.0 and a solubility parameter distance Rb to the plasticizer is in the range of 1.0 to 2.9 or 6.5 to 10.0 immediately after passing through an air gap to obtain a resin formed product. The forming step (B2) of obtaining a resin formed product can be performed in the same procedure as the forming step (A2) of Method A, but is different in the following points.

In the case of producing the separation membrane by Method B, the membrane surface of the resin formed product obtained in the forming step (B2) preferably has a non-porous structure including lamellar crystals. Therefore, as the solvent of the cooling bath, it is important to use a solvent in which the solubility parameter distance Ra to PMP is in the range of 5 to 18 and the solubility parameter distance Rb to the plasticizer is in the range of 1.0 to 2.9 or 6.5 to 10.0 for the cooling bath. When Ra and Rb are in the above range, a preferable membrane surface is obtained. It is presumed that when Ra is in the range of 5 to 18, solidification occurs before crystallization of PMP, and when Rb is in the range of 1.0 to 2.9 or 6.5 to 10.0, exchange of the solvent and the plasticizer is performed at an appropriate speed, and a non-porous structure is formed. It is more preferable to use a solvent in which Ra is in the range of 5.0 to 7.0 and Rb is in the range of 6.5 to 10.0 for the cooling bath.

In the case of producing the separation membrane by Method B, when dibutyl phthalate is used as a plasticizer, the solvent used in the forming step (B2) is preferably cyclohexanone, diethyl phthalate, isophorone, dihexyl phthalate, Benzoflex (Benzoflex (registered trademark)) manufactured by Eastman, diisoheptyl phthalate, dimethyl phthalate, fatty acid methyl ester, n-butyl acetate, n-amyl acetate, triacetin, N, N-dimethylacetamide, butyl diglycol acetate, acetyl triethyl citrate, n-propyl acetate, dipropylene glycol mono-N-butyl ether, diethylene glycol monobutyl ether, t-butyl acetate, 3-ethoxypropionate, propylene glycol monomethyl ether acetate, diacetone alcohol, isopentyl acetate, tri N-butyl citrate, Solvesso (registered trademark) 100 manufactured by Exxon Mobil Corporation, isobutyl isobutyrate, ε-caprolactone, propylene glycol phenyl ether, isopropyl acetate, sec-butyl acetate, propylene glycol monobutyl ether, texanol, Solvesso 150, ethylbenzene, γ-butyrolactone, tetrahydrofurfuryl alcohol, N, N-dimethylformamide, dipropylene glycol methyl ether, dipropylene glycol methyl ether, propylene glycol monomethyl ether, triethyl citrate, methyl carbitol, ethyl lactate, ethylene glycol monobutyl ether, cyclohexane, methylcyclohexane, dimethylcyclohexane, benzyl alcohol, and dimethyl sulfoxide, and among them, triacetin is more preferable because Ra and Rb are within the above-mentioned more preferable ranges.

Unlike the forming step (A2), the air gap distance is not particularly limited, but the air gap distance in the forming step (B2) is preferably 10 to 80 mm. By passing through the air gap of 10 to 80 mm, the thickness of the surface layer becomes favorable. The air gap distance is preferably 10 to 60 mm, more preferably 10 to 40 mm, and particularly preferably 10 to 30 mm.

(B3) Washing step

This is a washing step of introducing the resin formed product obtained in B2 into a solvent in which a solubility parameter distance Ra to poly(4-methyl-1-pentene) is in the range of 8 to 35 and a solubility parameter distance Rb to the plasticizer is in the range of 5 to 35, and extracting the plasticizer contained in the resin formed product into the solvent while stretching the resin formed product 1.1 to 5.0 times to obtain a separation membrane. The method differs from Method A in that stretching is required in the washing step (B3). The washing step (B3) can be performed using the same solvent as in the washing step (A3) of Method A, but it is important to perform stretching during the step. As a result, it is possible to cleave between the lamellar structure and the lamellar structure on the membrane surface of the non-porous structure to form a membrane surface having both lamellar crystals and micropores.

In general, a technique is known in which lamellar crystals are cleaved by stretching to form a porous structure on the surface and inside of a separation membrane. However, in this method, only a specific pore, that is, a portion where bonding is weak is greatly cleaved, which may lead to formation of a coarse pore or breakage during conveyance.

Therefore, when stretching is performed in a state in which the polymer is plasticized and swollen by the plasticizer and the washing solvent, it is expected that uniform structure formation is performed without generating defects, and a membrane in which micropores are formed between lamellar crystals is obtained. The inventors have found that when stretching is performed during a washing step, opening portions that can prevent entry of a solvent into the membrane can be formed at a high opening ratio on the membrane surface 1 having the accumulated lamellar crystals.

In order to improve gas permeability by effective opening, the stretch ratio is preferably 1.1 times or more. On the other hand, when the area occupied by the opening portions increases, entry of the solvent into the membrane is less likely to be suppressed, so that solvent resistance is likely to decrease. Therefore, the stretch ratio is preferably 5.0 times or less. The stretch ratio is more preferably 1.2 to 3.0, and particularly preferably 1.5 to 2.0.

For the same reason as in the washing step (A3), the temperature of the washing solvent is preferably 10 to 50°C, more preferably 20 to 45°C, and particularly preferably 25 to 40°C.

In the production of the separation membrane of the present invention, a drying step can be included after the washing step (A3) or (B3). The resin formed product is preferably subjected to a drying step for the purpose of removing the solvent attached in the washing step. It is preferable to perform drying at a temperature at which the above-mentioned washing solvent can be vaporized and removed, and specifically, it is preferable to perform drying at room temperature to 150°C. In this way, the separation membrane of the present invention containing PMP as a main component can be produced.

(Degassing Module)

The degassing module is a constituent unit that separates gas from liquid. The separation membrane of the present invention obtained as described above can be formed into a degassing module by filling a case by a known method. For example, a hollow fiber membrane module includes a plurality of hollow fiber membranes and a tubular case. The plurality of hollow fiber membranes are bundled and inserted into a tubular case, and then the ends thereof are fixed to the case and sealed with a thermosetting resin such as polyurethane or an epoxy resin. The end of the hollow fiber membrane cured with the thermosetting resin is cut to obtain an opening surface of the hollow fiber membrane, thereby preparing a degassing module.

In the degassing module including the separation membrane of the present application, the liquid to be treated is water, an organic solvent, and a mixture thereof. The liquid may contain a hydrocarbon solvent. The liquid may be at least one selected from the group consisting of glycols, glycol monoalkyl ethers, glycol dialkyl ethers, glycol monoacetates, glycol diacetates, alcohols, ketones, acetate esters, lactate esters, saturated hydrocarbons, unsaturated hydrocarbons, cyclic saturated hydrocarbons, cyclic unsaturated hydrocarbons, aromatic hydrocarbons, terpenes, ethers, cyclic imides, 3-alkyl-2-oxazolidinone, N-alkyl pyrrolidone, lactones, and nitrogen-containing solvents. The liquid may be a UV ink or a ceramic ink.

EXAMPLES

Hereinafter, the present invention will be described more specifically with reference to examples, but the present invention is not limited thereto at all.

[Measurement and evaluation methods]

Each characteristic value in Examples is obtained by the following method.

(1) Outer diameter and inner diameter ($\mu$m) of hollow fiber membrane

After the hollow fiber membranes were frozen with liquid nitrogen, a stress was applied (using a razor blade or a microtome as necessary), and the exposed radial cross sections were observed with an optical microscope. The average values of the outer diameter and the inner diameter at randomly selected ten positions were taken as the outer diameter and the inner diameter of the hollow fiber membranes, respectively.

(2) Hollowness (%) of hollow fiber membrane

From the outer diameter and the inner diameter determined in the above (1), the hollowness of the hollow fiber membrane was calculated by the following equation.

Hollowness (%) = [inner diameter ($\mu$m$^2$)]$^2$/[outer diameter ($\mu$m$^2$)]$^2 \times 100$

(3) Gas permeability (GPU)

A small module having an effective length of 100 mm composed of three hollow fiber membranes was prepared. Specifically, three hollow fiber membranes were bundled and inserted into a plastic pipe as a cylindrical case, and then at the end of the hollow fiber membrane bundle, the gap between the membranes and the gap between the pipes were cured with a thermosetting resin and sealed. An opening surface of the hollow fiber membrane was obtained by cutting the end of the sealed hollow fiber membrane, and a small module for evaluation was prepared. The gas permeation flow rate was measured using this small module. As the measurement gas, carbon dioxide or nitrogen was used alone for evaluation, and the pressure change on the permeation side per unit time of carbon dioxide or nitrogen was measured by an external pressure method at a measurement temperature of 37°C in accordance with the pressure sensor method of JIS K7126-1(2006). Herein, the pressure difference between the supply side and the permeation side was set to 100 kPa. The temperature of the gas was 37°C. The differential pressure of 100 kPa means that the pressure difference between the gas supply side and the gas permeation side of the separation membrane is 100 kPa.

Subsequently, the gas permeation flow rate Q was calculated by the following Equation (4), and the value was defined as gas permeability. Here, J is a gas flux, and $P_H$ and $P_L$ are partial pressures on a gas supply side and a gas permeation side, respectively. GPU is a general unit indicating the gas permeation flow rate Q, and 1 GPU=$3.35\times10^{-10}$ mol/m$^2\cdot$s$\cdot$Pa. The ratio of the gas permeation flow rate Q of each component was defined as a separation coefficient $\alpha$. [Mathematical formula 4]

$$Q[GPU] = \frac{J}{3.35 \times 10^{-10}(P_H - P_L)} \qquad \text{... Equation (4)}$$

(4) Surface layer thickness ($\mu$m)

In the same manner as in the above-described (1), the separation membrane was frozen with liquid nitrogen, and then a stress was applied (using a razor blade, a microtome, or a broad ion beam as necessary) to cut the separation membrane such that a radial cross section or a longitudinal cross section was exposed. Subsequently, in a case where the radial cross section or the longitudinal cross section is pretreated by being subjected to sputtering with platinum, and then observed with a SEM at a magnification of 10,000 times, when assuming that a straight line is drawn perpendicularly to the outer surface from an arbitrary point on the outer surface of the separation membrane toward the inner surface side (inner layer side), the length of the straight line first reaching the pore exceeding 50 nm is defined as the surface layer thickness.

The extraction of pores in the inner layer for determining the thickness of the surface layer is performed after the analysis image is binarized in image analysis software "ImageJ". This will be described with reference to Figs. 3-5. Fig. 3 is an example of an image observed at a magnification of 10,000 times using an SEM. Fig. 4 is a processed image of a surface layer cross section from which noise has been removed after binarization of Fig. 3. In a case where the distribution of the number of pixels is expressed by the abscissa representing the luminance in the analysis image and the ordinate representing the number of pixels in the luminance, when the number of pixels in the luminance with the highest number of pixels is A, binarization is performed in accordance with a point with small luminance among two points of luminance with the number of pixels being 1/2A. Furthermore, an image obtained by performing noise removal (corresponding to Despeckle in ImageJ) once on the obtained binarized image by replacing all pixels with the median value of $3 \times 3$ pixels in the vicinity of the pixel is used as an analysis image. As shown in Fig. 5, a line perpendicular to the outer surface was drawn from an arbitrary point on the outer surface of the obtained image toward the inner surface side, and the length until the pore exceeding 50 nm was reached for the first time was calculated. The measurement was performed at ten arbitrary positions, and the average value thereof was adopted as the thickness of the surface layer.

(Sputtering)

Apparatus: (E-1010) manufactured by Hitachi High-Technologies Corporation
Deposition time: 40 seconds Current value: 20 mA

(SEM)

Apparatus: (SU1510) manufactured by Hitachi High-Technologies Corporation
Acceleration voltage: 5 kV Probe current: 30 pA

(5) Area rate (%) of lamellar crystals on membrane surface

The surface on the side having the lamellar crystals was sputtered with platinum to perform pretreatment, and then the area of the lamellar crystals when observed at a magnification of 60,000 times using SEM, that is, the bright part of the SEM image was extracted, and the area ratio in the entire observation image was calculated. The extraction of the lamellar crystals is performed after the analysis image is binarized (Otsu's binarization) in image analysis software "ImageJ". An image obtained by performing noise removal (corresponding to Despeckle in ImageJ) five times on the obtained binarized image by replacing all pixels with the median value of $3 \times 3$ pixels in the vicinity of the pixel is used as an analysis image. All the resulting bright parts were extracted by an Analyze Particles command of ImageJ, and the area ratio of the lamellar crystals was calculated from the area of the resulting bright parts. Incidentally, the measurement was performed at arbitrary five positions, and the average value thereof was adopted as the area ratio of the lamellar crystals to the entire observation image. Note that the ratio of lamellar crystals on the membrane surface can be determined by determining the ratio of lamellar crystals in the observation image.

(Sputtering)

Apparatus: (E-1010) manufactured by Hitachi High-Technologies Corporation
Deposition time: 40 seconds Current value: 20 mA

(SEM)

Apparatus: (S5500) manufactured by Hitachi High-Technologies Corporation
Acceleration voltage: 5 kV Probe current: 30 pA

(6) Average pore size (nm) of micropores on membrane surface

The surface on the side having the lamellar crystals was sputtered with platinum under the same conditions as in (5) to perform pretreatment. All the pores having a diameter of more than 1 nm, that is, all the pores having an area of more than $0.785 \ \mathrm{nm}^2$ when observed at a magnification of 60,000 times using SEM were extracted, and from the area, the pore size when the pores were regarded as a perfect circle was calculated, and the average value thereof was taken as the surface pore size. The extraction of pores is performed after binarizing the analysis image (binarizing Huang) in image analysis software "ImageJ". Furthermore, an image obtained by performing noise removal (corresponding to Despeckle in ImageJ) once on the obtained binarized image by replacing all pixels with the median value of $3 \times 3$ pixels in the vicinity of the pixel is used as an analysis image. Pore extraction was performed by an ImageJ Analyze Particles command, and the surface pore size was calculated from the area of the obtained holes. The measurement was performed at arbitrary five positions, and the average value thereof was taken as the average pore size of the micropores on the membrane surface.

(7) Opening ratio of micropores on membrane surface (%)

The surface on the side having the lamellar crystals was sputtered with platinum under the same conditions as in (5) to perform pretreatment. When all the pores having a diameter of more than 1 nm, that is, all the pores having an area of more than $0.785 \ \mathrm{nm}^2$ when observed at a magnification of 60,000 times using SEM were extracted, and the area ratio of the opening portions when the area of the entire observed image was taken as 100% was calculated from the number and area of the pores, and taken as the opening ratio on the membrane surface. The extraction of pores is performed after binarizing the analysis image (binarizing Huang) in image analysis software "ImageJ". Furthermore, an image obtained by performing noise removal (corresponding to Despeckle in ImageJ) once on the obtained binarized image by replacing all pixels with the median value of $3 \times 3$ pixels in the vicinity of the pixel is used as an analysis image. The extraction of pores was performed by an Analyze Particles command of ImageJ, and the area ratio of the opening portions to the entire observation image was calculated from the number and area of the obtained pores. The measurement was performed at arbitrary five positions, and the average value thereof was taken as the opening ratio on the membrane surface.

(8) Number of opening portions per 1 $\mu \mathrm{m}^2$ of membrane surface (number/$\mu \mathrm{m}^2$)

The surface on the side having the lamellar crystals was sputtered with platinum under the same conditions as in (5) to perform pretreatment. All the pores having a diameter of more than 1 nm, that is, all the pores having an area of more than $0.785 \ \mathrm{nm}^2$ when observed at a magnification of 60,000 times using SEM were extracted and taken as the number of the opening portions in the observation region. Pore extraction was performed using image analysis software "ImageJ" under the same conditions as in (7). Next, the area of the observation region was determined, and the number of opening portions per unit area (1 $\mu \mathrm{m}^2$) was calculated by the following equation. The measurement was performed at arbitrary five positions, and the average value thereof was taken as the number of opening portions per 1 $\mu \mathrm{m}^2$ of the membrane surface.

Number of opening portions per 1 $\mu \mathrm{m}^2$ of membrane surface (number/$\mu \mathrm{m}^2$) = number of opening portions in observation region (number)/area of observation region ($\mu \mathrm{m}^2$)

(9) Area ratio (%) of lamellar crystals to membrane surface excluding opening portions

From the area ratio of the lamellar crystals to the entire observed image obtained in the above (5) and the opening ratio obtained in the above (6), the area ratio of the lamellar crystals to the surface excluding the opening portions was calculated by the following equation, and defined as the area ratio of the lamellar crystals to the membrane surface.

Area rate (%) of lamellar crystals = area rate% of lamellar crystals in entire observation image/(1-opening ratio (%))

When no opening is observed on the surface in the above (5), the area ratio of the lamellar crystals to the entire observation image obtained in the above (5) was taken as the area ratio of the lamellar crystals on the membrane surface.

(10) Porosity of membrane cross section (%)

In the same manner as in the above-described (1), the separation membrane was frozen with liquid nitrogen, and then a stress was applied (using a razor blade, a microtome, or a broad ion beam as necessary) to cut the separation membrane such that a radial cross section or a longitudinal cross section was exposed. Subsequently, under the same conditions as in the above (4), sputtering was performed with platinum, and pretreatment was performed on the radial cross section or the longitudinal cross section. Thereafter, the area of the micropores, that is, the dark portion of the SEM image when observed at a magnification of 10,000 times using the SEM was extracted, and the area ratio in the entire observed image was calculated as the opening ratio of the membrane cross section. The extraction of the micropores is performed after binarizing the analysis image (binarizing Huang) in image analysis software "ImageJ". An image obtained by performing noise removal (corresponding to Despeckle in ImageJ) once on the obtained binarized image by replacing all pixels with the median value of $3 \times 3$ pixels in the vicinity of the pixel is used as an analysis image. For extraction of pores, all the obtained dark portions were extracted by an Analyze Particles command of ImageJ, and the area ratio of the micropores was calculated from the area of the obtained dark portions. The measurement was performed at arbitrary five positions, and the average value thereof was adopted as the average porosity in the membrane cross section.

(11) Number of pores larger than 10 $\mu$m in membrane cross section

In the same manner as in the above-described (1), the separation membrane was frozen with liquid nitrogen, and then a stress was applied (using a razor blade, a microtome, or a broad ion beam as necessary) to cut the separation membrane such that a radial cross section or a longitudinal cross section was exposed. Subsequently, under the same conditions as in the above (4), sputtering was performed with platinum to perform pretreatment. All the pores having a diameter of more than 10 $\mu$m, that is, all the pores having an area of more than 78.5 $\mu$m$^2$ per visual field when observed at a magnification of 2,000 times using SEM were extracted, and the number thereof was calculated. Note that the diameter of the pore in which the entire pore at the end of the image was not in the visual field was calculated in this state. The extraction of pores is performed after binarizing the analysis image (binarizing Huang) in image analysis software "ImageJ". Furthermore, an image obtained by performing noise removal (corresponding to Despeckle in ImageJ) once on the obtained binarized image by replacing all pixels with the median value of $3 \times 3$ pixels in the vicinity of the pixel is used as an analysis image. Pore extraction was performed by an ImageJ's Analyze Particles command, and the number of obtained pores was measured from the obtained image. The measurement was performed at arbitrary five positions, and the average value thereof was adopted as the number of pores larger than 10 $\mu$m in the membrane cross section.

(12) Ratio a/b of long axis length a and short axis length b of pores in inner layer

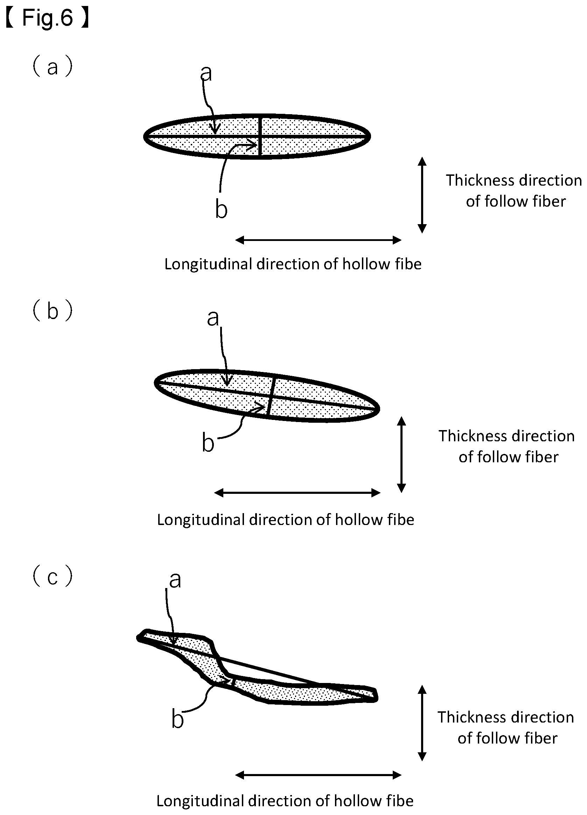

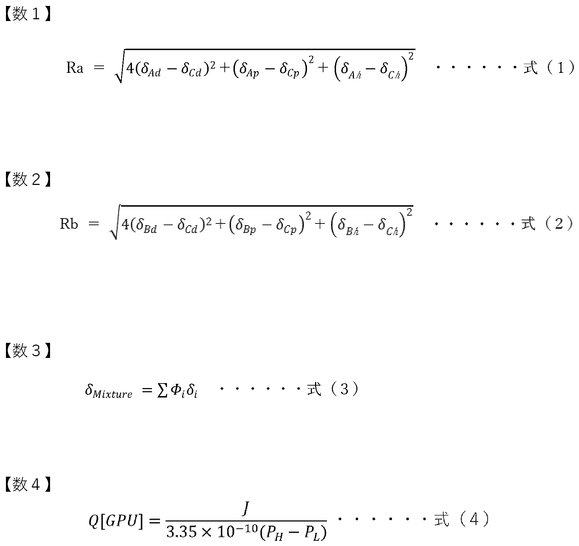

The separation membrane was frozen with liquid nitrogen in the same manner as in the above (1), and then cut using a microtome so that the longitudinal cross section was exposed. The obtained section was sputtered with platinum under the same conditions as in (5), pretreated, and then observed with a SEM at a magnification of 10,000 times. From the obtained observation image, one pore was randomly selected, and the long axis length a and the short axis length b of the pore were determined. Pores that cannot be regarded as substantially ellipses were excluded from the measurement targets. For the measurement, a pore in which 50% or more of the length a of the long axis was present in the pore when the long axis connected both ends with a straight line was used. Hereinafter, description will be made with reference to Figs. 6(a) to 6(c). In Figs. 6(a) to 6(c), the long axis length a of the pore is the length of the longest straight line 9 among straight lines that can directly connect two points on the outer edge of the pore. The line segment 9 is not necessarily parallel to the longitudinal direction of the hollow fiber (see Figs. 6(b) and 6(c)). The short axis length b is the length of the longest straight line 10 among straight lines that can directly connect two points on the outer edge of the pore. Here, the straight lines 9 and 10 do not necessarily intersect (see Fig. 6(c)). From the long axis length a and the short axis length b obtained as described above, the ratio a/b of the long axis length a and the short axis length b was calculated by the following equation. The measurement was performed at five positions, and the average value thereof was adopted as the ratio a/b of the major axis length a and the minor axis length b of the pores in the inner layer.

a/b = long axis length of pore a (nm)/short axis length of pore b (nm)

(13) Porosity of separation membrane (%)

In a case where the separation membrane had the shape of a hollow fiber membrane, the fiber length L (mm) and the mass M (g) of the hollow fiber membrane vacuum-dried at 25°C for 8 hours were measured. The density $\rho_1$ of the hollow fiber membrane was calculated from the following equation using the values of the outer diameter (mm) and the inner diameter (mm) measured in the above-described (1).

$\rho_1$ = M/[$\pi \times$ { (outer diameter/2)$^2$ - (inner diameter/2)$^2$} $\times$ L]

The porosity $\varepsilon$(%) was calculated from the following equation.

$$\varepsilon \;=\; 1 \;-\; \rho_1/\rho_2$$

where $\rho_2$ is the density of the polymer.

(14) Period length of lamellar crystal on membrane surface (nm)

The surface on the side having the lamellar crystals was sputtered with platinum under the same conditions as in (5) to perform pretreatment, and then the period length of the lamellar crystal was calculated when observed at a magnification of 30,000 times using SEM. Calculation was performed according to the following method using image processing software ImageJ.

    A. Read SEM image with Image-J (the file size is 512×512 pixels.)
    B. Since an image is output with an autocorrelation function as Result when Process/FFT/FD Math is executed, the image type is set to 16 bits.
    C. The line profile is performed using the line tool to pass through the high brightness point in the center of the image and to be horizontal.
    D. Analyze/Plot Profile is executed, and Plot of Result is output.
    E. Execute List button to output intensity and distance and create graph.
    F. The distance from the luminance at the center of the autocorrelation function (output image) to the first proximity peak is measured to calculate the cycle length.

(15) Degree of crystallinity of membrane surface (%)

ATR spectrum measurement was performed on the surface of the hollow fiber membrane vacuum-dried at 25°C for 8 hours using FTIR (FTS-55 A) manufactured by BioRad DIGILAB with a single reflection ATR attachment device. A diamond prism was used for the ATR crystal, and the ATR crystal was performed at an incident angle of 45° and an integration number of 64 times. From the obtained ATR spectrum, the degree of crystallinity was calculated using the intensity ratio of a predetermined band. In the case of a hollow fiber membrane of PMP, the band intensity was calculated from the following equation using the band intensity around 849 cm$^{-1}$ and the band intensity around 1169 cm$^{-1}$.

IR intensity ratio of outer surface = [Band intensity around 849 cm$^{-1}$]/[Band intensity around 1169 cm$^{-1}$]

Degree of crystallinity (%) =172.9 $\times$ IR intensity ratio of outer surface.

[PMP raw material]

TPX (registered trademark) DX845(Density: 833 kg/m$^3$, MFR: 9.0 g/10 min) manufactured by Mitsui Chemicals, Inc. was used as a PMP raw material.

(Example 1)

35 mass% of PMP and 65 mass% of dibutyl phthalate as a plasticizer were supplied to a twin-screw extruder, melt-kneaded at 290°C, then introduced into a melt spinning pack at a spinning temperature of 245°C, and spun downward from the outer annular portion of the discharge spinneret having one spinneret hole (double circular tube type, discharge hole diameter: 1.2 mm, discharge gap: 0.20 mm). The spun hollow fiber was introduced into a cooling bath of dioctyl phthalate, and wound up with a winder so that the draft ratio was 3.5. At that time, the air gap distance was set to 10 mm. Here, as the filter in the melt spinning pack, a metal filter having a diameter of 100 $\mu$m was used. The wound hollow fiber was immersed in isopropyl alcohol for 24 hours, and further vacuum-dried at room temperature to remove isopropyl alcohol, thereby obtaining a hollow fiber membrane. No stretching was performed in the washing step, that is, the stretch ratio was set to 1.0. Physical properties of the obtained hollow fiber membranes are shown in Table 1. On the membrane surface of the obtained hollow fiber membrane on the side having the lamellar crystals, the average pore size of the micropores was 16 nm, the opening ratio was 1.4%, the area ratio of the lamellar crystals was 35%, and the period of the lamellar crystal was 39 nm. In addition, the $N_2$ permeability was 7733 GPU, and the $N_2$ permeability after immersion in chloroform/isopropyl alcohol =1/1 (volume/volume) was 494 GPU, which were excellent in permeability and had high organic solvent resistance.

(Example 2)

A hollow fiber membrane was obtained in the same manner as in Example 1 except that the solvent of the cooling bath was butyl benzoate. As a result, as shown in Table 1, on the membrane surface on the side having the lamellar crystals, the average pore size was 18 nm, the opening ratio was 0.8%, the area ratio of the lamellar crystals was 34%, and the period of the lamellar crystal was 46 nm. The $N_2$ permeability was 11049 GPU, and the $N_2$ permeability after immersion in chloroform/isopropyl alcohol = 1/1 (volume/volume) was 217 GPU.

(Example 3)

A hollow fiber membrane was obtained in the same manner as in Example 1 except that the solvent of the cooling bath was N-methylpyrrolidone. As a result, as shown in Table 1, on the membrane surface on the side having the lamellar crystals, the average pore size was 25 nm, the opening ratio was 0.2%, the area ratio of the lamellar crystals was 47%, and the period of the lamellar crystal was 26 nm. The $N_2$ permeability was 14979 GPU, and the $N_2$ permeability after immersion in chloroform/isopropyl alcohol = 1/1 (volume/volume) was 6 GPU.

(Example 4)

A hollow fiber membrane was obtained in the same manner as in Example 1 except that the solvent of the cooling bath was benzyl benzoate. As a result, as shown in Table 1, on the membrane surface on the side having the lamellar crystals, the average pore size was 20 nm, the opening ratio was 0.1%, the area ratio of the lamellar crystals was 37%, and the period of the lamellar crystal was 35 nm. The $N_2$ permeability was 12623 GPU, and the $N_2$ permeability after immersion in chloroform/isopropyl alcohol = 1/1 (volume/volume) was 10 GPU.

(Example 5)

35 mass% of PMP and 65 mass% of dibutyl phthalate as a plasticizer were supplied to a twin-screw extruder, melt-kneaded at 290°C, then introduced into a melt spinning pack at a spinning temperature of 245°C, and spun downward from the outer annular portion of the discharge spinneret having one spinneret hole (double circular tube type, discharge hole diameter: 1.2 mm, discharge gap: 0.20 mm). The spun hollow fiber was introduced into a cooling bath of N-methylpyrrolidone, and wound with a winder so that the draft ratio was 3.5. At that time, the air gap distance was set to 10 mm. Here, as the filter in the melt spinning pack, a metal filter having a diameter of 100 $\mu$m was used. Subsequently, as a washing step, the obtained hollow fiber was stretched 1.2 times at a stretching speed of 2%/sec in isopropyl alcohol at 40°C, then immersed for 24 hours, and further vacuum-dried at room temperature to remove isopropyl alcohol, thereby obtaining a hollow fiber membrane. As a result, as shown in Table 1, on the membrane surface on the side having the lamellar crystals, the average pore size was 29 nm, the opening ratio was 0.5%, the area ratio of the lamellar crystals was 45%, and the period of the lamellar crystal was 30 nm. The $N_2$ permeability was 23623 GPU, and the $N_2$ permeability after immersion in chloroform/isopropyl alcohol = 1/1 (volume/volume) was 24 GPU.

(Example 6)

A hollow fiber membrane was obtained in the same manner as in Example 1 except that triacetin was used as the solvent in the cooling bath and the stretch ratio in the washing step was set to 1.8 times. As a result, as shown in Table 1, on the membrane surface on the side having the lamellar crystals, the average pore size was 10 nm, the opening ratio was 1.9%, the area ratio of the lamellar crystal was 46%, and the period of the lamellar crystal was 43 nm. The $N_2$ permeability was 23267 GPU, and the $N_2$ permeability after immersion in chloroform/isopropyl alcohol = 1/1 (volume/volume) was 1163 GPU.

(Example 7)

A hollow fiber membrane was obtained in the same manner as in Example 1 except that the stretch ratio in the washing step was set to 1.2 times. As a result, as shown in Table 1, on the membrane surface on the side having the lamellar crystals, the average pore size was 19 nm, the opening ratio was 2.0%, the area ratio of the lamellar crystal was 33%, and the period of the lamellar crystal was 47 nm. The $N_2$ permeability was 18740 GPU, and the $N_2$ permeability after immersion in chloroform/isopropyl alcohol =1/1 (volume/volume) was 94 GPU.

(Example 8)

A hollow fiber membrane was obtained in the same manner as in Example 1 except that the stretch ratio in the washing step was set to 1.8 times. As a result, as shown in Table 1, on the membrane surface on the side having the lamellar crystals, the average pore size was 24 nm, the opening ratio was 4.9%, the area ratio of the lamellar crystal was 29%, and the period of the lamellar crystal was 55 nm. The $N_2$ permeability was 25333 GPU, and the $N_2$ permeability after immersion in chloroform/isopropyl alcohol = 1/1 (volume/volume) was 8 GPU.

(Comparative Example 1)

A hollow fiber membrane was obtained in the same manner as in Example 1 except that the solvent of the cooling bath was triacetin. No stretching was performed in the washing step, that is, the stretch ratio was set to 1.0. As a result, as shown in Table 1, no opening portion was observed on the membrane surface on the side having the lamellar crystals, and the $N_2$ permeability was as low as 40 GPU. The area ratio of the lamellar crystals on the membrane surface was 54%, the period of the lamellar crystal was 23 nm, and the $N_2$ permeability after immersion in chloroform/isopropyl alcohol =1/1 (volume/volume) was 39 GPU.

(Comparative Example 2)

A hollow fiber membrane was obtained in the same manner as in Example 1 except that the solvent of the cooling bath was dimethyl phthalate. No stretching was performed in the washing step, that is, the stretch ratio was set to 1.0. As a result, as shown in Table 2, no opening portion was observed on the membrane surface on the side having the lamellar crystals, and the $N_2$ permeability was as low as 158 GPU. The area ratio of the lamellar crystals on the membrane surface was 58%, the period of the lamellar crystal was 18 nm, and the $N_2$ permeability after immersion in chloroform/isopropyl alcohol = 1/1 (volume/volume) was 15 GPU.

(Comparative Example 3)

A hollow fiber membrane was obtained in the same manner as in Example 3 except that the air gap distance was set to 35 mm. No stretching was performed in the washing step, that is, the stretch ratio was set to 1.0. As a result, as shown in Table 2, no opening portion was observed on the membrane surface on the side having the lamellar crystals, and the $N_2$ permeability was as low as 150 GPU. The area ratio of the lamellar crystals on the membrane surface was 55%, the period of the lamellar crystal was 40 nm, and the $N_2$ permeability after immersion in chloroform/isopropyl alcohol =1/1 (volume/volume) was 17 GPU.

(Comparative Example 4)

A hollow fiber membrane was obtained in the same manner as in Example 1 except that the discharge gap was set to 0.35 mm, the draft ratio was set to 231, the air gap distance was set to 20 mm, and the solvent of the cooling bath was triacetin. No stretching was performed in the washing step, that is, the stretch ratio was set to 1.0. As a result, as shown in Table 2, no lamellar crystal was observed on the membrane surface having a dense surface layer (that is, the area ratio of the lamellar crystals is 0%.), and the $N_2$ permeability after immersion in chloroform/isopropyl alcohol = 1/1 (volume/volume) was as low as 0 GPU. That is, the $N_2$ permeability was less than 5 GPU and was poor.

(Comparative Example 5)

Spinning was performed with 100 mass% of PMP and a draft ratio of 700, and air cooling was performed without using a cooling bath. A hollow fiber membrane was obtained in the same manner as in Example 1 except that after air cooling, stretching was performed at a stretch temperature of 130°C and a stretch ratio of 2.3 times. Since there was no cooling bath, there was no air gap distance. A plasticizer was not used as a raw material, but the wound hollow fiber was immersed in isopropyl alcohol for 24 hours, and further vacuum-dried at room temperature to remove isopropyl alcohol, thereby obtaining a hollow fiber membrane. The hollow fiber membrane was stretched, but was not stretched in the washing step. In Table 2, stretching was out of scope. As a result, as shown in Table 2, the porosity was 20%, and the $N_2$ permeability was as low as 3 GPU. The area ratio of the lamellar crystals on the membrane surface was as very low as 1%, and the period could not be calculated. The $N_2$ permeability after immersion in chloroform/isopropyl alcohol = 1/1 (volume/volume) was as low as 2 GPU.

(Comparative Example 6)

Spinning was performed with 100 mass% of PMP and a draft ratio of 750, and air cooling was performed without using a cooling bath. A hollow fiber membrane was obtained in the same manner as in Example 1 except that after air cooling, the unstretched spun yarn was heat-treated at 190°C for 2 hours while being wound around a spool, and then stretched at a stretch temperature of 130°C and a stretch ratio of 2.3 times. Since there was no cooling bath, there was no air gap distance. A plasticizer was not used as a raw material, but the wound hollow fiber was immersed in isopropyl alcohol for 24 hours, and further vacuum-dried at room temperature to remove isopropyl alcohol, thereby obtaining a hollow fiber membrane. The hollow fiber membrane was stretched, but was not stretched in the washing step. In Table 2, stretching was out of scope. As a result, as shown in Table 2, a dense surface layer was not observed, and the entire membrane had a microporous structure. The area ratio of the lamellar crystals on the membrane surface was as low as 9%, and the period could not be calculated. The $N_2$ permeability after immersion in chloroform/isopropyl alcohol =1/1 (volume/volume) was as low as 0 GPU.

(Comparative Example 7)

Spinning was performed with 100 mass% of PMP, a discharge gap of 1.0 mm, and a draft ratio of 400, and air cooling was performed without using a cooling bath. A hollow fiber membrane was obtained in the same manner as in Example 1 except that after air cooling, the spun yarn was stretched at a stretch ratio of 2.0 times, and further heat-fixed at 190°C for about 1 second while being relaxed at 0.8 times. Since there was no cooling bath, there was no air gap distance. A plasticizer was not used as a raw material, but the wound hollow fiber was immersed in isopropyl alcohol for 24 hours, and further vacuum-dried at room temperature to remove isopropyl alcohol, thereby obtaining a hollow fiber membrane. The hollow fiber membrane was stretched, but was not stretched in the washing step. In Table 2, stretching was out of scope. As a result, as shown in Table 2, no lamellar crystal was observed on the membrane surface having a dense surface layer (that is, the area ratio of the lamellar crystals is 0%.), and the $N_2$ permeability after immersion in chloroform/isopropyl alcohol = 1/1 (volume/volume) was as low as 0 GPU.

(Comparative Example 8)

A hollow fiber membrane was obtained in the same manner as in Example 6 except that the stretch ratio in the washing step was set to 1.05 times. As a result, as shown in Table 2, the $N_2$ permeability was as low as 646 GPU.

[Table 1-1]

| | | Example 1 | Example 2 | Example 3 | Example 4 |
|---|---|---|---|---|---|
| Content of PMP in raw material | [% by weight] | 35 | 35 | 35 | 35 |
| Content of plasticizer in raw material | [% by weight] | 65 | 65 | 65 | 65 |
| Plasticizer type | [-] | Dibutyl phthalate | Dibutyl phthalate | Dibutyl phthalate | Dibutyl phthalate |
| Discharge gap | [mm] | 0.2 | 0.2 | 0.2 | 0.2 |
| Idling distance | [mm] | 10 | 10 | 10 | 10 |
| Draft ratio | [-] | 3.5 | 3.5 | 3.5 | 3.5 |
| Cooling bath solvent | [-] | Dioctyl phthalate | Butyl benzoate | N-methylpyrrolidone | Benzyl benzoate |
| Solubility parameter distance Ra between PMP and cooling bath solvent | $[Mpa^{1/2}]$ | 7.8 | 4.4 | 11.0 | 4.6 |
| Solubility parameter distance Rb between plasticizer and cooling bath solvent | $[Mpa^{1/3}]$ | 3.1 | 3.5 | 4.8 | 5.7 |
| Type of washing solvent | [-] | Isopropyl alcohol | Isopropyl alcohol | Isopropyl alcohol | Isopropyl alcohol |
| Stretch ratio in washing | [-] | 1.0 | 1.0 | 1.0 | 1.0 |
| Main component | [-] | PMP | PMP | PMP | PMP |
| Dense surface layer | [-] | Present | Present | Present | Present |
| Surface layer thickness | [μm] | 0.27 | 0.21 | 0.25 | 0.22 |
| Average pore size of micropores on membrane surface | [nm] | 16 | 18 | 25 | 20 |
| Membrane surface opening ratio | [%] | 1.4 | 0.8 | 0.2 | 0.1 |
| Number of pores on membrane surface | $[number/μm^2]$ | 500 | 60 | 5 | 2 |
| Degree of crystallinity of membrane surface | [%] | 35 | 32 | 33 | 32 |
| Area ratio of lamellar crystals to membrane surface excluding opening portions | [%] | 35 | 34 | 47 | 37 |
| Period of lamellar crystal on membrane surface | [nm] | 39 | 45 | 26 | 35 |
| Porosity | [%] | 54 | 54 | 54 | 54 |
| Porosity of membrane cross section | [%] | 49 | 44 | 41 | 42 |
| a/b ratio of pores | [-] | 1.07 | 1.53 | 1.04 | 1.04 |
| Shape | [-] | Hollow fiber | Hollow fiber | Hollow fiber | Hollow fiber |
| Dense surface layer position | [-] | Outer surface | Outer surface | Outer surface | Outer surface |
| $N_2$ permeability | [GPU] | 7733 | 11049 | 14979 | 12623 |
| $CO_2/N_2$ separation coefficient α | [-] | 0.9 | 0.9 | 0.8 | 0.8 |
| $N_2$ permeability when immersed in chloroform/isopropyl alcohol =1/1 (volume/volume) for 3 seconds | [GPU] | 494 | 217 | 6 | 10 |

[Table 1-2]

| | | Example 5 | Example 6 | Example 7 | Example 8 |
|---|---|---|---|---|---|
| Content of PMP in raw material | [% by weight] | 35 | 35 | 35 | 35 |
| Content of plasticizer in raw material | [% by weight] | 65 | 65 | 65 | 65 |
| Plasticizer type | [-] | Dibutyl phthalate | Dibutyl phthalate | Dibutyl phthalate | Dibutyl phthalate |
| Discharge gap | [mm] | 0.2 | 0.2 | 0.2 | 0.2 |
| Idling distance | [mm] | 10 | 10 | 10 | 10 |
| Draft ratio | [-] | 3.5 | 3.5 | 3.5 | 3.5 |
| Cooling bath solvent | [-] | N-methylpyrrolidone | Triacetin | Dioctyl phthalate | Dioctyl phthalate |
| Solubility parameter distance Ra between PMP and cooling bath solvent | $[Mpa^{1/2}]$ | 11.0 | 6.2 | 7.8 | 7.8 |
| Solubility parameter distance Rb between plasticizer and cooling bath solvent | $[Mpa^{1/2}]$ | 4.8 | 7.0 | 3.1 | 3.1 |
| Type of washing solvent | [-] | Isopropyl alcohol | Isopropyl alcohol | Isopropanol | Isopropanol |
| Stretch ratio in washing | [-] | 1.2 | 1.8 | 1.2 | 1.8 |
| Main component | [-] | PMP | PMP | PMP | PMP |
| Dense surface layer | [-] | Present | Present | Present | Present |
| Surface layer thickness | [μm] | 0.20 | 0.12 | 0.23 | 0.22 |
| Average pore size of micropores on membrane surface | [nm] | 29 | 10 | 19 | 24 |
| Membrane surface opening ratio | [%] | 0.5 | 1.9 | 2.0 | 4.9 |
| Number of pores on membrane surface | $[number/\mu m^2]$ | 223 | 1070 | 723 | 1560 |
| Degree of crystallinity of membrane surface | [%] | 29 | 31 | 34 | 31 |
| Area ratio of lamellar crystals to membrane surface excluding opening portions | [%] | 45 | 46 | 33 | 29 |
| Period of lamellar crystal on membrane surface | [nm] | 30 | 43 | 47 | 55 |
| Porosity | [%] | 54 | 51 | 55 | 55 |
| Porosity of membrane cross section | [%] | 41 | 40 | 47 | 46 |
| a/b ratio of pores | [-] | 1.90 | 2.56 | 2.11 | 2.68 |
| Shape | [-] | Hollow fiber | Hollow fiber | Hollow fiber | Hollow fiber |
| Dense surface layer position | [-] | Outer surface | Outer surface | Outer surface | Outer surface |
| $N_2$ permeability | [GPU] | 23623 | 23267 | 18740 | 25333 |
| $CO_2/N_2$ separation coefficient α | [-] | 0.8 | 0.8 | 0.8 | 0.8 |
| $N_2$ permeability when immersed in chloroform/isopropyl alcohol =1/1 (volume/volume) for 3 seconds | [GPU] | 24 | 1163 | 94 | 8 |

[Table 2-1]

| | | Comparative Example 1 | Comparative Example 2 | Comparative Example 3 | Comparative Example 4 |
|---|---|---|---|---|---|
| Content of PMP in raw material | [% by weight] | 35 | 35 | 35 | 35 |
| Content of plasticizer in raw material | [% by weight] | 65 | 65 | 65 | 65 |
| Plasticizer type | [-] | Dibutyl phthalate | Dibutyl phthalate | Dibutyl phthalate | Dibutyl phthalate |
| Discharge gap | [mm] | 0.2 | 0.2 | 0.2 | 0.35 |
| Idling distance | [mm] | 10 | 10 | 35 | 20 |
| Draft ratio | [-] | 3.5 | 3.5 | 3.5 | 231 |
| Cooling bath solvent | [-] | Triacetin | Dimethyl phthalate | N-methylpyrrolidone | Triacetin |
| Solubility parameter distance Ra between PMP and cooling bath solvent | $[Mpa^{1/2}]$ | 6.2 | 9.5 | 11.0 | 6.2 |
| Solubility parameter distance Rb between plasticizer and cooling bath solvent | $[Mpa^{1/2}]$ | 7.0 | 2.8 | 4.8 | 7.0 |
| Type of washing solvent | [-] | Isopropyl alcohol | Isopropyl alcohol | Isopropyl alcohol | Isopropyl alcohol |
| Stretch ratio in washing | [-] | 1.0 | 1.0 | 1.0 | 1.0 |
| Main component | [-] | PMP | PMP | PMP | PMP |
| Dense surface layer | [-] | Present | Present | Present | Present |
| Surface layer thickness | [μm] | 0.14 | 0.17 | 0.30 | 1.80 |
| Average pore size of micropores on membrane surface | [nm] | No opening portion | No opening portion | No opening portion | No opening portion |
| Membrane surface opening ratio | [%] | (Out of scope) | (Out of scope) | (Out of scope) | (Out of scope) |
| Number of pores on membrane surface | $[number/μm^2]$ | (No opening portion) | (No opening portion) | (No opening portion) | (No opening portion) |
| Degree of crystallinity of membrane surface | [%] | 28 | 29 | 35 | 0 |
| Area ratio of lamellar crystals to membrane surface excluding opening portions | [%] | 54 | 58 | 55 | 0 |
| Period of lamellar crystal on membrane surface | [nm] | 23 | 18 | 40 | (Out of scope) |
| Porosity of membrane cross section | [%] | 53 | 53 | 53 | 45 |
| Average porosity of membrane cross section | [%] | 42 | 45 | 41 | 39 |
| a/b ratio of pores | [-] | 1.05 | 1.06 | 1.05 | 1.23 |
| Shape | [-] | Hollow fiber | Hollow fiber | Hollow fiber | Hollow fiber |
| Dense surface layer position | [-] | Outer surface | Outer surface | Outer surface | - |
| $N_2$ permeability | [GPU] | 40 | 158 | 150 | 30 |
| $CO_2/N_2$ separation coefficient α | [-] | 9.9 | 3.3 | 4.1 | 1.2 |
| $N_2$ permeability when immersed in chloroform/isopropyl alcohol =1/1 (volume/volume) for 3 seconds | [GPU] | 39 | 15 | 17 | 0 |

[Table 2-2]

| | | Comparative Example 5 | Comparative Example 6 | Comparative Example 7 | Comparative Example 8 |
|---|---|---|---|---|---|
| Content of PMP in raw material | [% by weight] | 100 | 100 | 100 | 35 |
| Content of plasticizer in raw material | [% by weight] | 0 | 0 | 0 | 65 |
| Plasticizer type | [-] | – | – | – | Dibutyl phthalate |
| Discharge gap | [mm] | 0.2 | 0.2 | 1.0 | 0.2 |
| Idling distance | [mm] | – | – | – | 10 |
| Draft ratio | [-] | 700 | 750 | 400 | 3.5 |
| Cooling bath solvent | [-] | – | – | – | Triacetin |
| Solubility parameter distance Ra between PMP and cooling bath solvent | [$Mpa^{1/2}$] | – | – | – | 6.2 |
| Solubility parameter distance Rb between plasticizer and cooling bath solvent | [$Mpa^{1/2}$] | – | – | – | 7.0 |
| Type of washing solvent | [-] | Isopropyl alcohol | Isopropyl alcohol | Isopropyl alcohol | Isopropyl alcohol |
| Stretch ratio in washing | [-] | – | – | – | 1.05 |
| Main component | [-] | PMP | PMP | PMP | PMP |
| Dense surface layer | [-] | Present | Absent | Present | Present |
| Surface layer thickness | [μm] | 0.60 | 0 | 0.17 | 0.13 |
| Average pore size of micropores on membrane surface | [nm] | No opening portion | 37 | 5 | 5 |
| Membrane surface opening ratio | [%] | (Out of scope) | 1 | 0.7 | 0.06 |
| Number of pores on membrane surface | [number/$μm^2$] | (No opening portion) | 6.2 | 550 | 45 |
| Degree of crystallinity of membrane surface | [%] | 3 | 26 | 60 | 29 |
| Area ratio of lamellar crystals to membrane surface excluding opening portions | [%] | 1 | 9 | 0 | 53 |
| Period of lamellar crystal on membrane surface | [nm] | Unmeasurable | Unmeasurable | Unmeasurable | 30 |
| Porosity of membrane cross section | [%] | 18 | 31 | 35 | 53 |
| Average porosity of membrane cross section | [%] | 8 | 21 | 23 | 41 |
| a/b ratio of pores | [-] | Unmeasurable | 2.14 | 2.11 | 1.72 |
| Shape | [-] | Hollow fiber | Hollow fiber | Hollow fiber | Hollow fiber |
| Dense surface layer position | [-] | – | – | – | Outer surface |
| $N_2$ permeability | [GPU] | 3 | 1271 | 626 | 646 |
| $CO_2/N_2$ separation coefficient α | [-] | 5.5 | 0.9 | 1.0 | 1.4 |
| $N_2$ permeability when immersed in chloroform/isopropyl alcohol =1/1 (volume/volume) for 3 seconds | [GPU] | 2 | 0 | 0 | 123 |

In the separation membrane obtained in Example 1 to 8, the average pore size, the opening ratio, the area ratio of the lamellar crystals, and the period of the lamellar crystals on the membrane surface on the side having the lamellar crystals satisfied the requirements of the present invention, and in all cases, the $N_2$ permeability was 1000 GPU or more, the $N_2$ permeability after immersion in chloroform/isopropyl alcohol =1/1 (volume/volume) was 5 or more, and the separation membrane was excellent in permeability and had high organic solvent resistance. On the other hand, the separation membrane of Comparative Example 1 to 3 having no opening portion on the membrane surface and the separation membrane of Comparative Example 8 in which the opening ratio on the membrane surface did not satisfy the requirements of the present invention showed low values of $N_2$ permeability. Furthermore, the separation membrane of Comparative Example 4 to 7 having no lamellar crystals accumulated on the membrane surface showed a low value of $N_2$ permeability after immersion in chloroform/isopropyl alcohol =1/1 (volume/volume). In all of Example 1 to 8, the number of pores larger than 10 μm in the inner layer was 0.

INDUSTRIAL APPLICABILITY

The separation membrane of the present invention can be suitably used for separating a gas from a liquid or applying a gas to a liquid. For example, in a semiconductor manufacturing line, a liquid crystal color filter manufacturing line, an ink manufacturing of an inkjet printer, and the like, it can be suitably used for a degassed membrane that reduces the amount of dissolved gas in water, an aqueous solution, an organic solvent, or a resist liquid, a gas exchange membrane in an oxygenator as a medical application, and the like. In particular, as a degassed membrane, it is very useful for degassing applications of a photoresist solution and a developer used for lithography in a semiconductor manufacturing line.

DESCRIPTION OF REFERENCE SIGNS

1: Membrane surface
2: Opening portion
3: Surface layer
4: Inner layer
5: Surface layer thickness
6: Lamellar crystal
7: Void (pore)
8: Hollow fiber separation membrane
a: Long axis of pore
b: Short axis of pore

**Claims**

1. A separation membrane comprising poly(4-methyl-1-pentene) as a main component and including a surface layer and an inner layer, at least one surface layer having lamellar crystals,
wherein micropores are provided on the surface layer having the lamellar crystals, an opening ratio is 0.1% to 10% when a ratio of the micropores to a membrane surface is taken as the opening ratio and the membrane surface is 100%, and an average pore size of the micropores is 3 nm to 30 nm.

2. The separation membrane according to claim 1, wherein $N_2$ permeability at a differential pressure of 100 kPa is 1000 GPU or more.

3. The separation membrane according to claim 1 or 2, wherein the degree of crystallinity on the membrane surface of the surface layer having the lamellar crystals is 5% to 35%.

4. The separation membrane according to any one of claims 1 to 3, wherein the area ratio of the lamellar crystals in the membrane surface of the surface layer having the lamellar crystals is 10% to 60% when the area excluding the opening portions of the membrane surface is 100%.

5. The separation membrane according to any one of claims 1 to 4, wherein the period of the lamellar crystal on the membrane surface of the surface layer having the lamellar crystals is 10 nm to 80 nm.

6. The separation membrane according to any one of claims 1 to 5, wherein a number of micropores are 1 pores $/\mu m^2$ or more and 20000 pores $/\mu m^2$ or less in the surface layer having the lamellar crystals.

7. The separation membrane according to any one of claims 1 to 6, wherein the separation membrane has a porosity of 30% to 70%.

8. The separation membrane according to any one of claims 1 to 7, wherein in the inner layer of the separation membrane, when a cross-sectional area cut in a thickness direction is 100%, a porosity is 25% to 60%.

9. The separation membrane according to any of claims 1 to 8, wherein the separation membrane has a hollow fiber shape.

10. The separation membrane according to claim 9, wherein the surface layer having the lamellar crystals is an outer surface of a hollow fiber separation membrane.

11. The separation membrane according to claim 9 or 10, wherein a ratio a/b of a major axis length a and a minor axis length b of a pore is 1.0 to 5.0 in a cross section obtained by cutting the inner layer of the hollow fiber separation membrane parallel to the longitudinal direction of the membrane and parallel to the thickness direction of the membrane.

12. The separation membrane according to any one of claims 1 to 11, wherein the $N_2$ permeability at a differential pressure of 100 kPa after the separation membrane is immersed in the following organic solvent A for 3 seconds is 5 GPU or more.
    Organic solvent A: chloroform/isopropyl alcohol = 1/1 (volume/volume)

13. A degassing module comprising the separation membrane according to any one of claims 1 to 12.

14. A method of manufacturing a separation membrane, comprising the following steps (A1) and (A2):

    (A1) a preparation step of melt-kneading a mixture containing 10 mass% to 50 mass% of poly(4-methyl-1-pentene) and 50 mass% to 90 mass% of a plasticizer to obtain a resin composition; and
    (A2) a forming step of discharging the resin composition from a discharge spinneret, and introducing the resin composition into a cooling bath of a solvent in which a solubility parameter distance Ra to poly(4-methyl-1-pentene) is in a range of 4.0 to 14.0 and a solubility parameter distance Rb to the plasticizer is in a range of 3.0 to 6.0 immediately after the resin composition passing through an air gap of 10 mm to 30 mm, to obtain a resin formed product.

15. The method for producing a separation membrane according to claim 14, further comprising, after the forming step (A2) of obtaining the resin formed product, a washing step (A3) of extracting the plasticizer contained in the resin formed product into a solvent having a solubility parameter distance Ra to poly(4-methyl-1-pentene) in a range of 8 to 35 and a solubility parameter distance Rb to the plasticizer in a range of 5 to 35.

16. The method for producing a separation membrane according to claim 15, wherein the resin formed product is stretched 1.1 to 5.0 times during the washing step (A3).

17. A method for producing a separation membrane, comprising the following steps (B1) to (B3), a resin formed product being stretched 1.1 to 5.0 times in a washing step (B3):

    (B1) a preparation step of melt-kneading a mixture containing 10 mass% to 50 mass% of poly(4-methyl-1-pentene) and 50 mass% to 90 mass% of a plasticizer to obtain a resin composition;
    (B2) a forming step of, immediately after discharging the resin composition from a discharge spinneret, introducing the resin composition into a cooling bath of a solvent in which a solubility parameter distance Ra to poly(4-methyl-1-pentene) is in a range of 5.0 to 18.0 and a solubility parameter distance Rb to the plasticizer is in a range of 1.0 to 2.9 or 6.5 to 10.0 to obtain a resin formed product; and
    (B3) the washing step of extracting the plasticizer contained in the obtained resin formed product into a solvent having a solubility parameter distance Ra to poly(4-methyl-1-pentene) in a range of 8 to 35 and a solubility parameter distance Rb to the plasticizer in a range of 5 to 35.

【Fig.1 】

【 Fig.2 】

【Fig.3】

【Fig.4】

【Fig.5】

【Fig.6】

( a )

Thickness direction
of follow fiber

Longitudinal direction of hollow fibe

( b )

Thickness direction
of follow fiber

Longitudinal direction of hollow fibe

( c )

Thickness direction
of follow fiber

Longitudinal direction of hollow fibe

【数1】

$$Ra = \sqrt{4(\delta_{Ad} - \delta_{Cd})^2 + \left(\delta_{Ap} - \delta_{Cp}\right)^2 + \left(\delta_{Ah} - \delta_{Ch}\right)^2} \quad \cdots \cdots \cdots 式（1）$$

【数2】

$$Rb = \sqrt{4(\delta_{Bd} - \delta_{Cd})^2 + \left(\delta_{Bp} - \delta_{Cp}\right)^2 + \left(\delta_{Bh} - \delta_{Ch}\right)^2} \quad \cdots \cdots \cdots 式（2）$$

【数3】

$$\delta_{Mixture} = \sum \Phi_i \delta_i \quad \cdots \cdots \cdots 式（3）$$

【数4】

$$Q[GPU] = \frac{J}{3.35 \times 10^{-10}(P_H - P_L)} \quad \cdots \cdots \cdots 式（4）$$

## INTERNATIONAL SEARCH REPORT

| International application No. |
| --- |
| **PCT/JP2023/030076** |

| | |
| --- | --- |
| **A.** | **CLASSIFICATION OF SUBJECT MATTER** |

*B01D 69/00*(2006.01)i; *B01D 69/02*(2006.01)i; *B01D 69/08*(2006.01)i; *B01D 71/26*(2006.01)i; *D01F 6/04*(2006.01)i
FI: B01D71/26; B01D69/08; D01F6/04 C; B01D69/00; B01D69/02

According to International Patent Classification (IPC) or to both national classification and IPC

| | |
| --- | --- |
| **B.** | **FIELDS SEARCHED** |

Minimum documentation searched (classification system followed by classification symbols)

B01D53/22; B01D61/00-71/82; C02F1/44; D01F1/00-6/96; D01F9/00-9/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2010-269307 A (NIPRO CORP.) 02 December 2010 (2010-12-02) claims, paragraphs [0023]-[0026], [0050], examples | 1-2, 9-10, 13 |
| A | claims, paragraphs [0023]-[0026], [0050], examples | 3-8, 11-12, 14-17 |
| A | JP 6-246139 A (DAINIPPON INK & CHEM., INC.) 06 September 1994 (1994-09-06) claims, paragraphs [0014]-[0015] | 1-17 |
| A | JP 6-246140 A (DAINIPPON INK & CHEM., INC.) 06 September 1994 (1994-09-06) claims, examples | 1-17 |
| A | JP 2017-516652 A (3M INNOVATIVE PROPERTIES CO.) 22 June 2017 (2017-06-22) claims, examples | 1-17 |
| A | JP 2002-535115 A (MEMBRANA GMBH) 22 October 2002 (2002-10-22) claims, examples 1-7 | 1-17 |
| A | US 6409921 B1 (MEMBRANA GMBH) 25 June 2002 (2002-06-25) claims | 1-17 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 October 2023** | **24 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/030076**

| Patent document cited in search report | | | Publication date (day/month/year) | Patent family member(s) | | | Publication date (day/month/year) |
|---|---|---|---|---|---|---|---|
| JP | 2010-269307 | A | 02 December 2010 | (Family: none) | | | |
| JP | 6-246139 | A | 06 September 1994 | (Family: none) | | | |
| JP | 6-246140 | A | 06 September 1994 | (Family: none) | | | |
| JP | 2017-516652 | A | 22 June 2017 | US | 2015/0258500 | A1 | |
| | | | | claims, examples | | | |
| | | | | US | 2018/0272290 | A1 | |
| | | | | WO | 2015/138723 | A1 | |
| | | | | EP | 3116633 | A1 | |
| | | | | KR | 10-2016-0132069 | A | |
| | | | | CN | 106659983 | A | |
| | | | | BR | 112016021096 | A | |
| JP | 2002-535115 | A | 22 October 2002 | US | 6497752 | B1 | |
| | | | | claims, examples 1-7 | | | |
| | | | | WO | 2000/043114 | A1 | |
| | | | | EP | 1144096 | A1 | |
| | | | | CN | 1336848 | A | |
| | | | | KR | 10-0654083 | B1 | |
| US | 6409921 | B1 | 25 June 2002 | JP | 2001-510724 | A | |
| | | | | WO | 1999/004891 | A1 | |
| | | | | CN | 1265047 | A | |
| | | | | KR | 10-0567153 | B1 | |

Form PCT/ISA/210 (patent family annex) (January 2015)

**EP 4 578 535 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2000043113 A
- JP 7116483 A
- JP 5413317 B
- JP 6210146 A

**Non-patent literature cited in the description**

- *Ind. Eng. Chem. Res.*, 2011, vol. 50, 3798-3817
- *Ind. Eng. Chem. Res.*, 2011, vol. 50, 3798-3817
- **CHARLES HANSEN**. *Hansen Solubility Parameter in Practice*